(19) Europäisches Patentamt / European Patent Office / Office européen des brevets

(11) **EP 2 083 302 A2**

(12) **EUROPÄISCHE PATENTANMELDUNG**

(43) Veröffentlichungstag:
**29.07.2009  Patentblatt 2009/31**

(51) Int Cl.:
*G02B 15/16* (2006.01)    *G02B 15/02* (2006.01)
*G02B 13/16* (2006.01)

(21) Anmeldenummer: **09006532.7**

(22) Anmeldetag: **13.02.2007**

(84) Benannte Vertragsstaaten:
**DE ES FR GB IT**

(30) Priorität: **14.02.2006   DE 102006006981**

(62) Dokumentnummer(n) der früheren Anmeldung(en) nach Art. 76 EPÜ:
**07722813.8 / 1 987 386**

(71) Anmelder: **Jos. Schneider Optische Werke GmbH**
**55543 Bad Kreuznach (DE)**

(72) Erfinder: **Schauß, Udo**
**55596 Waldböckelheim (DE)**

(74) Vertreter: **Köllner, Malte**
**Köllner & Partner**
**Patentanwälte**
**Vogelweidstrasse 8**
**60596 Frankfurt am Main (DE)**

Bemerkungen:
Diese Anmeldung ist am 14-05-2009 als Teilanmeldung zu der unter INID-Code 62 erwähnten Anmeldung eingereicht worden.

(54)    **Optisches System für die digitale Kinoprojektion**

(57)    Die Erfindung betrifft ein Projektionsobjektiv für die Projektion digitaler Bilddaten. Dieses Projektionsobjektiv kann in einem optischen System verwendet werden. Hauptanwendungsgebiet der Erfindung ist die digitale Kinoprojektion, bei der üblicherweise das Breitwand-Format 1,9:1 bzw. das Cinemascope-Format 2,37:1 (Breite:Höhe) angewendet werden. Das erfindungsgemäße Projektionsobjektiv hat günstigere optische Eigenschaften als die herkömmlichen Zoom-Objektive, wie einen minimalen Farbquerfehler, eine hohe Telezentrie, sehr geringe Verzerrungen und ein geringes Volumen und Gewicht.

**Fig. 17**

EP 2 083 302 A2

**Beschreibung**

Gebiet der Erfindung

Die Erfindung betrifft ein Projektionsobjektiv bzw. ein optisches System mit einem Projektionsobjektiv für die Projektion digitaler Bilddaten.

Derartige Projektionsobjektive werden vor allem in der digitalen Videotechnik für die Projektion digital aufgezeichneter Bilder in Kinos, in der Werbung oder bei Präsentationen eingesetzt. Hauptanwendungsgebiet der Erfindung ist jedoch die digitale Kinoprojektion.

Bei der Kinoprojektion werden üblicherweise zwei Formate projiziert: Zum einen das digitale Breitwandformat, welches ein Verhältnis Bildbreite (B) zu Bildhöhe (H) von B:H = 1,896:1 hat und durch ein DMD (siehe unten) mit 2048x1080 quadratischen Pixeln realisiert wird. Das digitale Breitwandformat wird häufig auch als 1,9:1-Format bezeichnet. Zum anderen wird das digitale Cinemascope-Format projiziert, welches das Format 2,37:1 hat. Dabei ist das Seitenverhältnis in der Breite um den in der digitalen Projektion geforderten (anamorphotischen) Faktor 1,25 vergrößert, d. h. 1,896*1,25 = 2,37.

Beim Cinemascope-Format wird das Bild bei der Aufnahme durch das Aufnahmeobjektiv in der Breite gestaucht. Das aufgezeichnete Bild hat ein Verhältnis Breite zu Höhe von 1,9:1. Die Entzerrung beim Projizieren erfolgt durch ein Projektionsobjektiv, welches zusammen mit einem Anamorphot auf der Leinwand das in die Breite gezogene Bild im Format 2,37:1 rekonstruiert.

Beim Breitwandformat wird das Bild i. d. R. bereits im Format 1,9:1 aufgenommen. Bei der Projektion wird das aufgenommene Bild nicht verändert.

Stand der Technik

In der digitalen Video-Projektionstechnik werden digitale elektrische Bildsignale in optische Informationen umgewandelt und auf eine Projektionswand projiziert. Zwei wichtige Beispiele für die digitale Video-Projektionstechnik stellen die Flüssigkristall-Technologie (Liquid Crystal Display, LCD) und die sogenannte DLP-Technologie (Digital Light Processing) dar. In der DLP-Technologie werden Matrizen von mikroelektromechanischen Spiegelsystemen (Digital Mirror Device, DMD) eingesetzt, welche einfallendes Licht je nach Stellung der einzelnen Spiegelelemente der Matrizen durch ein Projektionsobjektiv auf eine Projektionswand projizieren oder blockieren. Auch vollfarbige Bildinformationen können dargestellt werden, beispielsweise indem die drei Grundfarben Rot, Grün und Blau auf drei verschiedene DMD-Matrizen geleitet werden. Diese drei DMD-Matrizen werden elektronisch angesteuert und erzeugen jeweils ein Bild aus den drei Farbkanälen für die einzelnen Grundfarben. Durch einen Strahlvereiniger werden diese einzeln erzeugten Bilder wieder zusammengeführt und über ein Projektionsobjektiv vergrößert auf einer Projektionswand bzw. einem Bildschirm wiedergegeben. Das DMD, das zurzeit für die Kinoprojektion eingesetzt wird, hat üblicherweise das Format 1,9:1, entsprechend 2048*1080 quadratischen Pixeln.

Im Folgenden wird die dem Strahlvereiniger zugewandte Seite als Objektseite bezeichnet. In der konventionellen Projektionstechnik entspricht dies der Filmseite des Objektivs.

Da bei der digitalen Projektion raumaufwändige optische Elemente, wie z. B. ein Strahlvereiniger, zwischen die Bildinformationsquelle (z. B. das DMD) und das Projektionsobjektiv integriert werden, müssen Projektionsobjektive für die digitale Projektion eine hohe Schnittweite aufweisen. Die Schnittweite ist dabei als der Abstand der letzten objektseitigen Linsenoberfläche von der objektseitigen Brennebene definiert.

Der Einsatz von digitalen Projektionsgeräten, vor allem in öffentlichen Einrichtungen sowie für Werbung und im Kino nimmt ständig zu und erfordert zur Verbesserung der Bildqualität für diese Einsatzzwecke ein zunehmend größeres Auflösungsvermögen der hierbei verwendeten Projektionsobjektive, da die Größe der Mikrospiegel abnimmt.

Um bei diesem Projektionsverfahren ein ausreichend kontrastreiches Bild zu erhalten, ist es deshalb erforderlich, dass die für diese Zwecke eingesetzten Projektionsobjektive eine hohe Modulationsübertragungsfunktion (Modulation Transfer Function, MTF) aufweisen.

Außerdem muss der Farbquerfehler (laterale chromatische Aberration) möglichst gering sein, d. h. Punkte unterschiedlicher Farben müssen durch das Projektionsobjektiv möglichst in gleicher Weise projiziert werden.

Darüber hinaus müssen Projektionsobjektive für die digitale Projektion einen weitgehend telezentrischen Strahlengang aufweisen. Dies ist dadurch begründet, dass der Strahlvereiniger dem Objektiv nur Licht unterhalb eines bestimmten Grenzwinkels zuführen kann.

Telezentrie bedeutet, dass die Eintrittspupille nahezu im Unendlichen liegt. In anderen Worten, die von den Punkten des Objekts ausgehenden Hauptstrahlen (also Strahlen durch den Mittelpunkt der Eintrittspupille) verlaufen parallel zur optischen Achse, bzw. überschreiten einen bestimmtem Toleranzwinkel nicht.

Bei der (digitalen) Bildprojektion im Kino kommen üblicherweise nur die zwei o. g. Formate, nämlich das 1,9:1 Format (Breitwand-Format) und das Cinemascope-Format 2,37:1 zur Anwendung. Für die Umschaltung zwischen dem Breitwand- und dem Cinemascope-Format (mit oder ohne Anamorphot) sind die einzelnen Kinos unterschiedlich ausgerüstet. Einige behalten die Bildhöhe bei und verbreitern das Bild, andere behalten die Bildbreite bei und verändern die Bildhöhe. Die Beibehaltung einer konstanten Bildhöhe auf der Kino-Leinwand bedeutet, dass bei einer Veränderung des Filmformats von Breitwand auf Cinemascope der Vorhang weiter aufgezogen wird. Bei konstanter Bildbreite wird in diesem Fall die Leinwand durch Vorhänge von oben und unten verringert, wodurch die sichtbare Bildhöhe sich verringert.

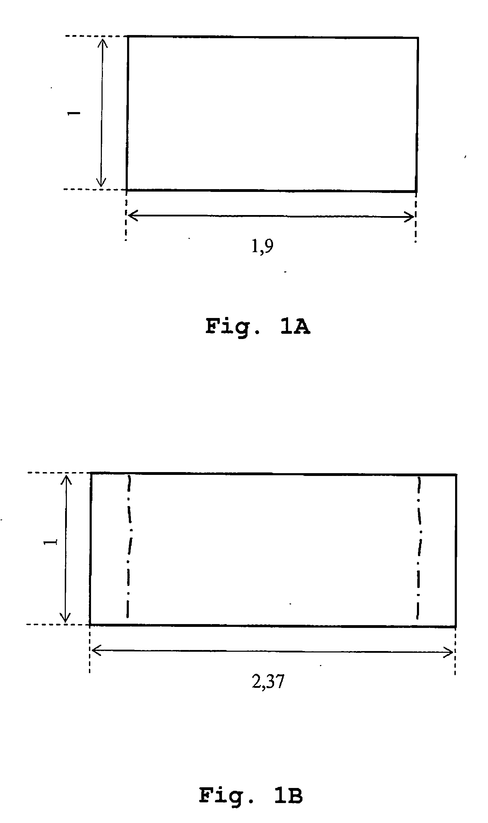

In beiden Kino-Ausstattungsvarianten (konstante Bildhöhe oder konstante Bildbreite auf der Leinwand) liegt bei der Projektion des Breitwandformats 1,9:1 dieses Format auf dem DMD vor (Fig. 1A) und wird durch ein Projektionsobjektiv mit einer vorgegeben Brennweite mit unverändertem Verhältnis von Breite zu Höhe auf die Leinwand projiziert.

Bei der Umschaltung von Breitwand auf Cinemascope (mit Anamorphot) wird in einem Kino mit einer konstanten Bildhöhe auf der Kino-Leinwand der Vorhang weiter aufgezogen (Fig. 1B). Die Brennweite des Objektivs bleibt unverändert, da die Höhe unverändert bleibt.

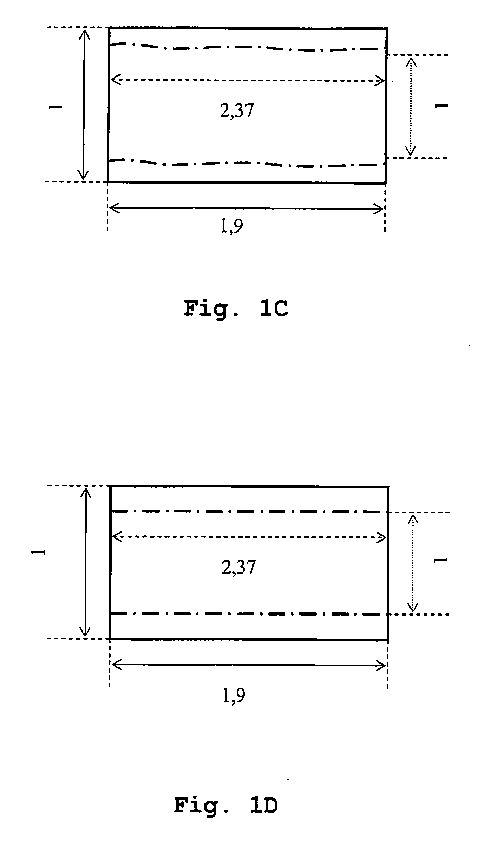

In einem Kino mit einer konstanten Bildbreite auf der Kino-Leinwand wird bei der Umschaltung von Breitwand auf Cinemascope (mit Anamorphot) die sichtbare Höhe der Leinwand durch einen Vorhang von oben und von unten verringert (Fig. 1C). Die Brennweite des Objektivs wird zur Realisierung der verringerten Bildhöhe auf der Leinwand vergrößert.

Beim Letterboxing (Fig. 1D) liegt das Bild auf dem DMD bereits im Format 2,37:1 vor. Dabei ist am oberen und unteren Rand des DMD ein ungenutzter Bereich. Bei der Umschaltung der Projektion von Breitwand auf Cinemascope ist kein Anamorphot erforderlich. Das Bild wird mit unverändertem Verhältnis von Breite zu Höhe auf die Leinwand projiziert.

Beim Letterboxing (Fig. 1D) wird in einem Kino mit einer konstanten Bildhöhe auf der Kino-Leinwand bei der Umschaltung von Breitwand auf Cinemascope (ohne Anamorphot) der Vorhang weiter aufgezogen. Die Brennweite des Objektivs wird in diesem Fall verringert, um die größer Bildbreite zu erzielen.

Beim Letterboxing (Fig. 1D) wird in einem Kino mit einer konstanten Bildbreite auf der Kino-Leinwand bei der Umschaltung von Breitwand auf Cinemascope die sichtbare Höhe der Leinwand durch einen Vorhang von oben und von unten verringert (Fig. 1D). Die Brennweite des Objektivs bleibt in diesem Fall konstant.

In Bezug auf die Brennweiten des Projektionsobjektivs ergeben sich für das Umschalten vom Breitwandformat auf Cinemascope die in der Tab. 11 dargestellten vier Anwendungssituationen:

Tab. 11

| Cinemascope-Projektion | Konstante Bildhöhe (auf der Leinwand) | Konstante Bildbreite (auf der Leinwand) |
|---|---|---|
| mit Anamorphot-Vorsatz | unveränderte Brennweite; Bildverbreiterung | Verlängerung der Brennweite; Verringerung der Bildhöhe |
| Letterboxing (ohne Anamorphot-Vorsatz) | Verkürzung der Brennweite; Bildverbreiterung | unveränderte Brennweite; Verringerung der Bildhöhe |

Die Kino-Ausstattung ist bei der Umschaltung der Formate üblicher Weise fixiert für eine bestimmte Variante: entweder Beibehaltung einer konstanten Bildhöhe oder Bildbreite auf der Leinwand. Daraus resultiert, dass lediglich eine Brennweitenumschaltung des Projektionsobjektivs zwischen zwei bestimmten Brennweiten erforderlich ist.

Die erforderliche Brennweitenumschaltung wird üblicherweise durch ein Zoom-Objektiv realisiert. Mit Zoom-Objektiven ist es allerdings äußerst schwierig, die Anforderungen an die Schnittweite, die Modulationsübertragungsfunktion, den Farbquerfehler und die Telezentrie für alle Brennweitenstellungen zu erfüllen.

Hinzu kommt, dass bei der Projektion des Breitwand- bzw. des Cinemascope-Formats die üblichen Zoom-Objektive hauptsächlich im Bereich der Grenzbrennweiten genutzt werden. Bekannterweise zeigen Zoom-Objektive speziell in diesen Brennweitenbereichen die ungünstigsten Abbildungseigenschaften.

Aufgabe

Aufgabe der Erfindung ist es, ein Projektionsobjektiv anzugeben, welches die Nachteile der bisherigen Zoom-Objektive vermeidet.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Ausgehend davon, dass bei der digitalen Bildprojektion im Kino üblicherweise nur die zwei o. g. Formate, nämlich das 1,9:1 Format (Breitwand-Format)sowie das Cinemascope-Format 2,37:1 zur Anwendung kommen, sind für diese zwei Formate auch nur Projektionsobjektive mit jeweils zwei verschiedenen Brennweiten erforderlich. Daher wird vorgeschlagen, Objektive mit Festbrennweiten einzusetzen. Diese verfügen über bessere Eigenschaften als die o. g. Zoom-Objektive.

Es wird daher ein optisches System vorgeschlagen mit einem Projektionsobjektiv für die Projektion digitaler Bilddaten mit einer festen Brennweite und mit einem in das Projektionsobjektiv einfügbaren Brennweitenverlängerer zur Umschaltung zwischen den zwei benötigten Brennweiten.

Das Einschwenken des Brennweitenverlängerers in das Projektionsobjektiv bewirkt eine Vergrößerung der Brennweite eines Projektionsobjektivs um das 1,25-fache. Es wird dadurch eine Verkleinerung des projizierten Bildes um den Faktor 1,25 erreicht. Dabei bleibt jedoch die Schnittweite unverändert. Umgekehrt erfolgt eine Verkürzung der vorgegebenen Brennweite durch Entfernen des Brennweitenverlängerers.

Durch den Einsatz des Brennweitenverlängerers wird es einem Kinoprojektor mit einem festbrennweitigen Projektionsobjektiv ermöglicht, sowohl Breitwand- als auch Cinemascope-Filme zu projizieren, und zwar auch, falls diese für das Letterboxing ausgelegt sind. Die dabei möglichen unterschiedlichen Situationen in einem Kino-Theater für die Realisierung der Breitwand- bzw. Cinemascope-Projektion sind in der Tab. 12 dargestellt.

Tab. 12

| **Projektion von** | **Konstante Bildhöhe** (auf der Leinwand, Vorhang an den Seiten der Leinwand) | **Konstante Bildbreite** (auf der Leinwand, Vorhang am oberen und unteren Rand der Leinwand) |
|---|---|---|
| Breitwandformat | - Objektiv mit eingeschwenktem Brennweitenverlängerer;<br>- kein Anamorphot;<br>- sichtbare Leinwand durch teilweises Schließen des Vorhangs der in der Breite verkleinert | Objektiv ohne Brennweitenverlängerer;<br>- kein Anamorphot;<br>- sichtbare Leinwand durch vollständiges Öffnen des Vorhangs in Höhe vergrößert |
| Cinemascope mit A-namorphot-Vorsatz | - Objektiv mit eingeschwenktem Brennweitenverlängerer;<br>- mit Anamorphot;<br>- sichtbare Leinwand durch vollständig Öff- durch nen des Vorhangs in der Breite vergrößert | - Objektiv mit eingeschwenktem Brennweitenverlängerer;<br>- mit Anamorphot;<br>- sichtbare Leinwand teilweises Schließen des Vorhangs in der Höhe verkleinert |
| Letterboxing (Cinemascope ohne Anamorphot-Vorsatz) | - Objektiv ohne Brennweitenverlängerer;<br>- ohne Anamorphot;<br>- sichtbare Leinwand durch vollständig Öffnen des Vorhangs in der Breite vergrößert | - Objektiv ohne Brennweitenverlängerer;<br>- ohne Anamorphot;<br>- sichtbare Leinwand durch teilweises Schließen des Vorhangs in der Höhe verkleinert |

Der Brennweitenverlängerer ist so ausgestaltet, dass er nach dem Revolver-Prinzip in den Blendenluftraum an der vorgegebenen Stelle der Linsenanordnung des Projektionsobjektivs eingeschwenkt oder wieder entfernt werden kann. Er kann aber auch als Riegel zum Einschieben ausgestaltet sein. Die Toleranz für die Genauigkeit der Lage des eingefügten Brennweitenverlängerers beträgt max. 20 μm.

Der Brennweitenverlängerer (auch "Range-Extender" genannt) weist vorteilhafterweise in der angegebenen Reihenfolge, von einer Projektionswand aus betrachtet, folgende Elemente auf:

    a) eine erste negative Linse;
    b) eine zweite positive Linse; und

mindestens drei weitere Linsen.

In einer vorteilhaften Ausgestaltung sind die mindestens drei weiteren Linsen in der angegebenen Reihenfolge von der Projektionswand aus betrachtet wie folgt ausgebildet:

c) eine dritte negative Linse;
d) eine vierte positive Linse; und
e) eine fünfte negative Linse.

Dieser Brennweitenverlängerer ist insbesondere für ein Projektionsobjektiv mit einer Brennweite zwischen 40 und 50 mm geeignet.

In einer anderen vorteilhaften Ausgestaltung sind die mindestens drei weiteren Linsen in der angegebenen Reihenfolge von der Projektionswand aus betrachtet wie folgt ausgebildet:

c) eine dritte positive Linse;
d) eine vierte negative Linse; und
e) eine fünfte negative Linse.

Dieser Brennweitenverlängerer ist insbesondere für ein Projektionsobjektiv mit einer Brennweite zwischen 50 und 100 mm geeignet.

Das Projektionsobjektiv für die Projektion digitaler Bilddaten weist vorteilhafterweise in der angegebenen Reihenfolge, von einer Projektionswand aus betrachtet, folgende Elemente auf:

a) eine erste negative Linse;
b) eine zweite negative Linse;
c) eine dritte negative Linse;
d) eine vierte positive optische Baugruppe;
e) eine fünfte positive Linse;
f) eine sechste negative Linse;
g) eine siebente Linse, die i. d. R. positiv ist;
h) eine achte Linse, die i. d. R. negativ ist;
i) eine neunte negative Linse;
j) eine zehnte positive Linse; und
k) eine elfte positive Linse.

Das vorgeschlagene optische System hat ein Projektionsobjektiv mit einer Festbrennweite. Das ermöglicht es, die Anforderungen an ein digitales Projektionsobjektiv zu erfüllen. Das Objektiv verfügt über hervorragende Eigenschaften in Bezug auf das Auflösungsvermögen und eine hohe Schnittweite. Das erfindungsgemäße Projektionsobjektiv weist einen minimalen Farbquerfehler auf, der DMD-seitig kleiner als 2 $\mu$m ist. Das Objektiv weist weiterhin eine hohe Telezentrie und sehr geringe Verzerrungen auf. Das wird ermöglicht durch die Verwendung eines Objektivs mit einer Festbrennweite. Solche Objektive können Zoom-Objektive in ihren optischen Eigenschaften übertreffen. Insbesondere sind die Nachteile eines Zoom-Objektivs an den Grenzbrennweiten, wie ein spürbarer Farbquerfehler, nicht mehr vorhanden.

Das vorgeschlagene Projektionsobjektiv hat ein geringeres Volumen und Gewicht als ein übliches Zoom-Projektionsobjektiv. Bei der Projektion von digitalen Bilddaten kann ein wesentlich kleinerer, preisgünstigerer Anamorphot eingesetzt werden, da der Durchmesser des Objektivs geringer ist, als bei den herkömmlichen Zoom-Objektiven. Auch kann es preisgünstiger hergestellt werden als ein Zoom-Objektiv.

In einer vorteilhaften Ausführung ist das Projektionsobjektiv so ausgestaltet, dass die vierte positive optische Baugruppe zwei Linsen aufweist. In dieser Ausgestaltung ist das Projektionsobjektiv besonders gut für Brennweiten zwischen 40 und 50 mm geeignet.

In einer vorteilhaften Ausführung der Erfindung ist der Brennweitenverlängerer zwischen der sechsten negativen Linse und der siebenten positiven Linse des Projektionsobjektivs angeordnet. Die vierte positive optische Baugruppe weist in dieser Ausführung zwei Linsen auf.

In einer anderen vorteilhaften Ausführung weist die vierte positive optische Baugruppe des Projektionsobjektivs genau eine positive Linse auf. In dieser Ausgestaltung ist das Projektionsobjektiv besonders gut für Brennweiten zwischen 50 und 100 mm geeignet.

Zwischen der sechsten negativen Linse und der siebenten positiven Linse des Projektionsobjektivs ist vorteilhafterweise eine Blende angeordnet. Die Blende ist in einer vorteilhaften Ausführung der Erfindung eine Festblende, die zu einer Blendenzahl von 2,5 führt. Die Blende ist an den Abstrahlwinkel bzw. die maximale Verkippung der einzelnen Spiegel des DMD angepasst.

Mindestens eine negative Linse vor der Blende ist vorteilhafterweise aus Fluorkron, hochbrechendem Schwerflint oder CaF2 (Flussspat) ausgebildet, während hinter der Blende mindestens eine positive Linse ebenfalls aus diesen Materialien ausgebildet ist. Je kürzer die Brennweite des Objektivs ist, desto mehr Linsen werden aus den genannten Materialien ausgebildet. Bei Brennweiten größer 60 mm können andere Materialien für die negativen Linsen vor der Blende verwendet werden.

Das erfindungsgemäße Projektionsobjektiv weist dadurch einen geeigneten definierten Farblängsfehler auf, da der rote DMD 45 $\mu$m weiter weg vom Objektiv angeordnet ist, als der grüne DMD, und der blaue DMD 15 $\mu$m weiter weg als der grüne DMD.

Die im Objektiv ursprünglich vorhandene Blende (Festblende) wird ausgeschwenkt und dafür der Extender mit eigener Blende eingeschwenkt. Die Blende reduziert das existierende Streulicht. Durch das Einschwenken des Brennweitenverlängerers wird die Blendenzahl des Objektivs ebenfalls um einen Faktor 1,25 vergrößert, das Bild aber entsprechend verkleinert. Die Helligkeit auf der Leinwand bleibt daher bei der Anwendung des Brennweitenverlängerers gleich gegenüber der Helligkeit ohne Brennweitenverlängerer. Dies ist ein weiterer Vorteil des vorgeschlagenen Festbrennweiten-Projektionsobjektivs gegenüber den üblichen Zoom-Objektiven.

Ein Kinobetreiber ist nicht verpflichtet, einen Brennweitenverlängerer einzusetzen. Anstelle des Brennweitenverlängerers kann stattdessen am digitalen Projektor das Letterboxing eingestellt werden. Dann kann in bestimmten Konstellationen (siehe Tabelle 12) die Brennweite unverändert bleiben und damit ohne Brennweitenverlängerer gearbeitet werden.

Daher gehören ferner zur Erfindung verschiedene Projektionsobjektive für die Projektion digitaler Bilddaten mit jeweils einer festen Brennweite.

Zum einen ist dies ein Projektionsobjektiv für die Projektion digitaler Bilddaten, welches in der angegebenen Reihenfolge, von einer Projektionswand aus betrachtet, folgende Elemente aufweist:

a) eine erste negative Linse;
b) eine zweite negative Linse;
c) eine dritte negative Linse;
d) eine vierte positive optische Baugruppe, die zwei Linsen aufweist;
e) eine fünfte positive Linse;
f) eine sechste negative Linse;
g) eine siebente Linse;
h) eine achte Linse;
i) eine neunte negative Linse;
j) eine zehnte positive Linse; und
k) eine elfte positive Linse.

Vorteilhafterweise weist dieses Projektionsobjektiv zwischen der sechsten negativen Linse und der siebenten positiven Linse eine Blende aufweist. Mindestens eine negative Linse vor der Blende ist aus Fluorkron oder hochbrechendem Schwerflint oder CaF2 ausgebildet. Ferner ist mindestens eine positive Linse hinter der Blende aus Fluorkron oder hochbrechendem Schwerflint oder CaF2 ausgebildet.

Zum anderen handelt es sich um ein Projektionsobjektiv für die Projektion digitaler Bilddaten, welches in der angegebenen Reihenfolge, von einer Projektionswand aus betrachtet, folgende Elemente aufweist:

a) eine erste negative Linse;
b) eine zweite negative Linse;
c) eine dritte negative Linse;
d) eine vierte positive Linse;
e) eine fünfte positive Linse;
f) eine sechste negative Linse;
g) eine Blende;
h) eine siebente Linse;
i) eine achte Linse;
j) eine neunte negative Linse;
k) eine zehnte positive Linse; und
l) eine elfte positive Linse;

wobei mindestens eine negative Linse vor der Blende aus Fluorkron oder hochbrechendem Schwerflint oder CaF2 ausgebildet ist; und wobei mindestens eine positive Linse hinter der Blende aus Fluorkron oder hochbrechendem Schwerflint oder CaF2 ausgebildet ist.

Projektionsobjektive mit teilweise übereinstimmenden Merkmalen finden sich bereits in der US 6,188,523 B1.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen Bereichsangaben beispielsweise stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1A eine schematische Darstellung des Formats 1,9:1;.

Fig. 1B eine schematische Darstellung des Formats 2,37:1 auf der Kinoleinwand bei konstanter Bildhöhe;

Fig. 1C eine schematische Darstellung des Formats 2,37:1 auf der Kinoleinwand mit konstanter Bildbreite;

Fig. 1D eine schematische Darstellung der Formate 1,9:1 und 2,37:1 auf dem DMD bei Letterboxing;

Fig. 2 als erstes Ausführungsbeispiel eine Linsenanordnung eines Projektionsobjektivs mit 44 mm Brennweite;

Fig. 3 die relative Beleuchtungsstärke des Projektionsobjektivs gemäß Fig. 2;

Fig. 4 die Verzeichnung des Projektionsobjektivs gemäß Fig. 2;

Fig. 5 den Transmissionsgrad des Projektionsobjektivs gemäß Fig. 2;

Fig. 6 die Modulationsübertragungsfunktion des Aufbaus gemäß Fig. 2 im Grünkanal bei 18, 36 und 72 Linienpaaren pro Millimeter;

Fig. 7 als zweites Ausführungsbeispiel eine Linsenanordnung eines Projektionsobjektivs mit 48 mm Brennweite;

Fig. 8 die relative Beleuchtungsstärke des Projektionsobjektivs gemäß Fig. 7;

Fig. 9 die Verzeichnung des Projektionsobjektivs gemäß Fig. 7;

Fig. 10 den Transmissionsgrad des Projektionsobjektivs gemäß Fig. 7;

Fig. 11 die Modulationsübertragungsfunktion des Aufbaus gemäß Fig. 7 im Grünkanal bei 18, 36 und 72 Linienpaaren pro Millimeter;

Fig. 12 als drittes Ausführungsbeispiel eine Linsenanordnung eines Projektionsobjektivs mit 60 mm Brennweite;

Fig. 13 die relative Beleuchtungsstärke des Projektionsobjektivs gemäß Fig. 12;

Fig. 14 die Verzeichnung des Projektionsobjektivs gemäß Fig. 12;

Fig. 15 den Transmissionsgrad des Projektionsobjektivs gemäß Fig. 12;

Fig. 16 die Modulationsübertragungsfunktion des Aufbaus gemäß Fig. 12 im Grünkanal bei 18, 36 und 72 Linienpaaren pro Millimeter; Fig. 17 als viertes Ausführungsbeispiel eine Linsenanordnung eines Projektionsobjektivs mit 48 mm Brennweite und Brennweitenverlängerer;

Fig. 18 die relative Beleuchtungsstärke des Projektionsobjektivs gemäß Fig. 17;

Fig. 19 die Verzeichnung des Projektionsobjektivs gemäß Fig. 17;

Fig. 20 den Transmissionsgrad des Projektionsobjektivs gemäß Fig. 17;

Fig. 21 die Modulationsübertragungsfunktion des Aufbaus gemäß Fig. 17 im Grünkanal bei 18, 36 und 72 Linienpaaren pro Millimeter;

Fig. 22 als fünftes Ausführungsbeispiel eine Linsenanordnung eines Projektionsobjektivs mit 60 mm Brennweite und Brennweitenverlängerer;

Fig. 23 die relative Beleuchtungsstärke des Projektionsobjektivs gemäß Fig. 22;

Fig. 24 die Verzeichnung des Projektionsobjektivs gemäß Fig. 22;

Fig. 25 den Transmissionsgrad des Projektionsobjektivs gemäß Fig. 22; und

Fig. 26 die Modulationsübertragungsfunktion des Aufbaus gemäß Fig. 22 im Grünkanal bei 18, 36 und 72 Linienpaaren pro Millimeter.

Die technischen Daten der in den Figuren dargestellten Projektionsobjektive sind in den Tabellen 1 bis 10 aufgelistet. Im Einzelnen zeigt:

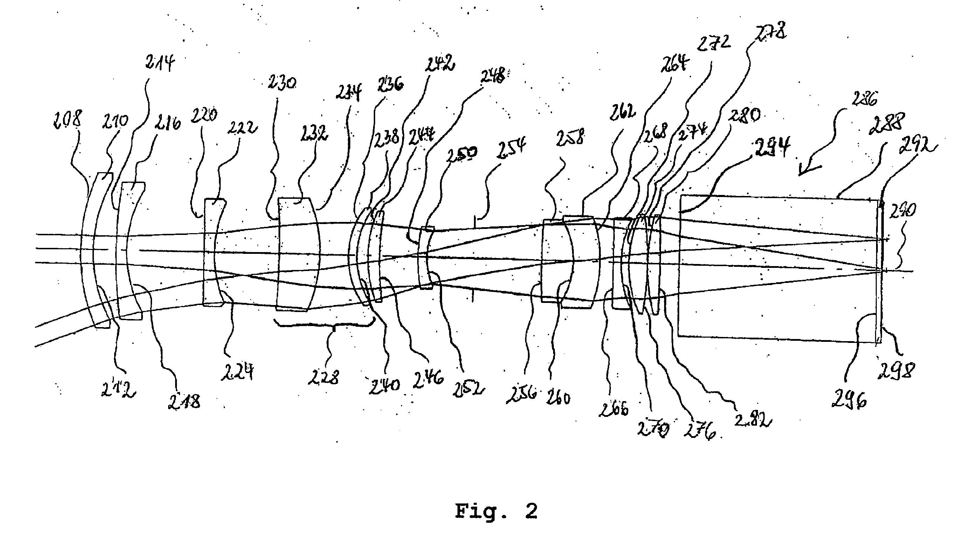

Tab. 1 eine Liste der Radien, der Dicken bzw. Luftabstände, der Brechzahlen und der Abbé-Zahlen des in Fig. 2 dargestellten Projektionsobjektivs;

Tab. 2 eine Liste der Asphärenkoeffizienten des in Fig. 2 dargestellten Projektionsobjektivs;

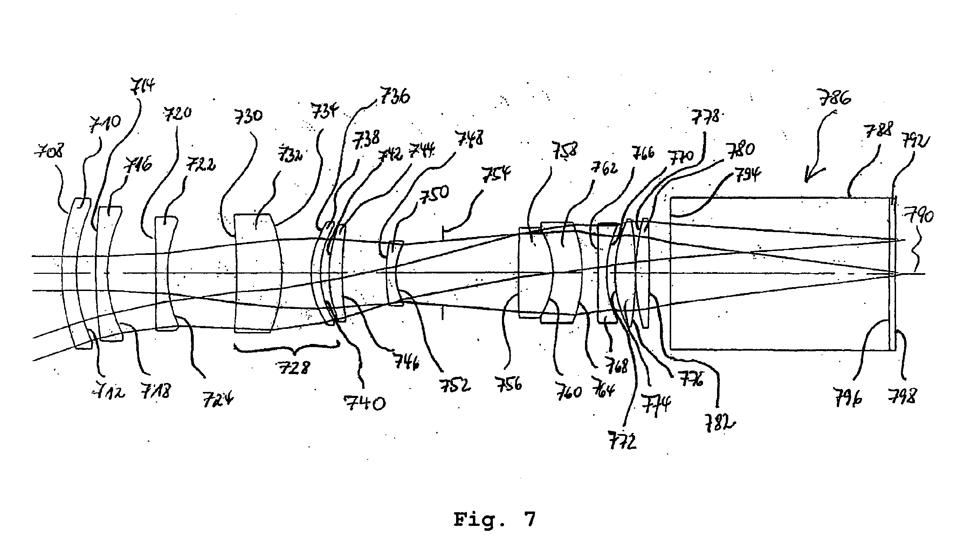

Tab. 3 eine Liste der Radien, der Dicken bzw. Luftabstände, der Brechzahlen und der Abbe-Zahlen des in Fig. 7 dargestellten Projektionsobjektivs;

Tab. 4 eine Liste der Asphärenkoeffizienten des in Fig. 7 dargestellten Projektionsobjektivs;

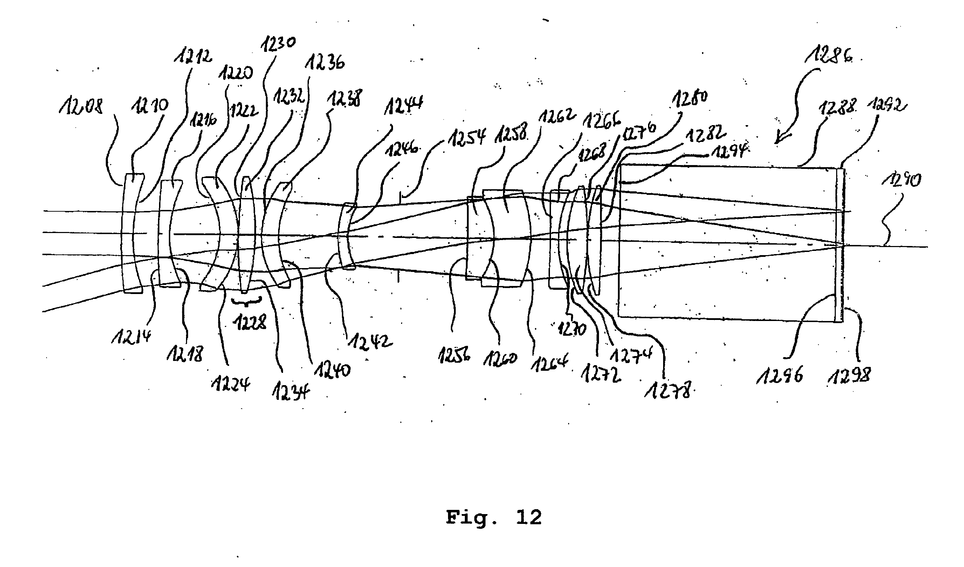

Tab. 5 eine Liste der Radien, der Dicken bzw. Luftabstände, der Brechzahlen und der Abbe-Zahlen des in Fig. 12 dargestellten Projektionsobjektivs;

Tab. 6 eine Liste der Asphärenkoeffizienten des in Fig. 12 dargestellten Projektionsobjektivs;

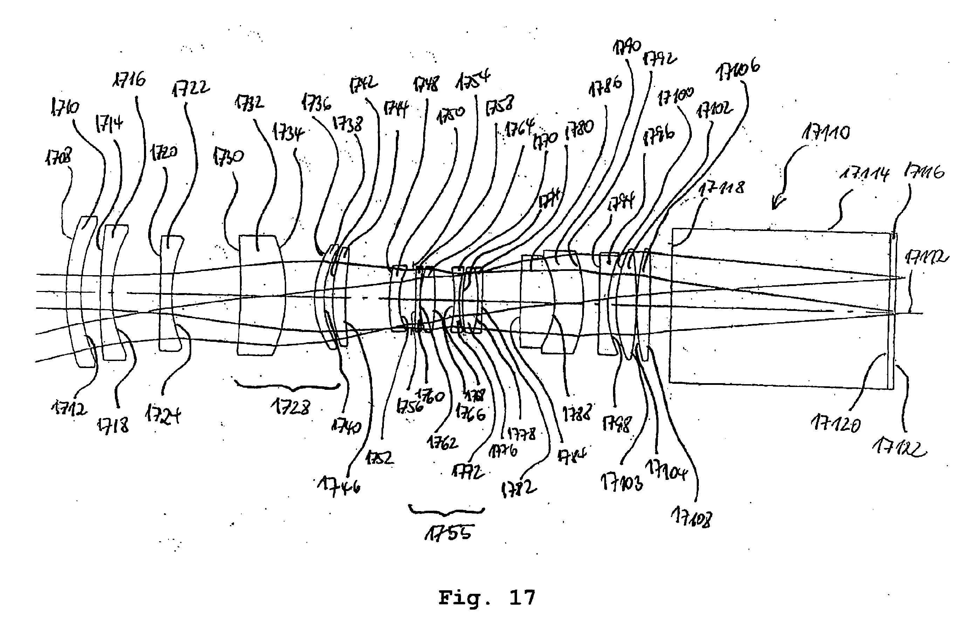

Tab. 7 eine Liste der Radien, der Dicken bzw. Luftabstände, der Brechzahlen und der Abbe-Zahlen des in Fig. 17 dargestellten Projektionsobjektivs;

Tab. 8    eine Liste der Asphärenkoeffizienten des in Fig. 17 dargestellten Projektionsobjektivs;

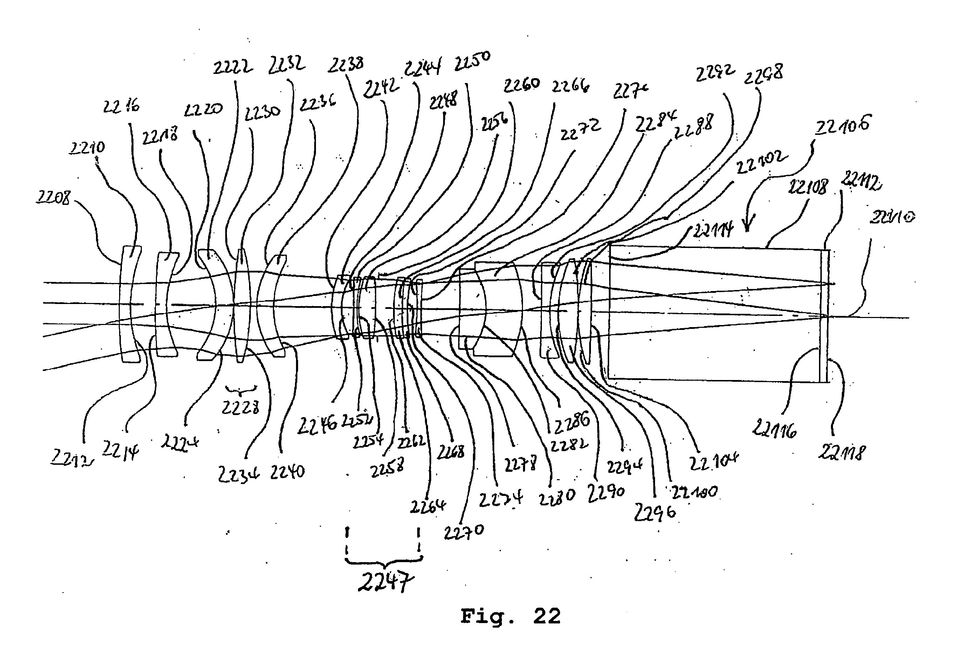

Tab. 9    eine Liste der Radien, der Dicken bzw. Luftabstände, der Brechzahlen und der Abbe-Zahlen des in Fig. 22 dargestellten Projektionsobjektivs; und

Tab. 10   eine Liste der Asphärenkoeffizienten des in Fig. 22 dargestellten Projektionsobjektivs.

Ausführungsbeispiele 1 und 2:

Die Ausführungsbeispiele 1 und 2, deren Linsenanordnungen in den Figuren 2 und 7 dargestellt sind, stellen Beispiele mit gleichem grundlegenden Aufbau dar, die sich jedoch bezüglich ihrer Brennweite unterscheiden.

Bei dem in Fig. 2 dargestellten ersten Ausführungsbeispiel handelt es sich um ein Projektionsobjektiv mit einer Brennweite von 44 mm und einer Blendenzahl von 2,5. Das Projektionsobjektiv gemäß dem in Fig. 7 dargestellten Aufbau hat eine Brennweite von 48 mm und eine Blendenzahl von 2,5.

In den Darstellungen gemäß Fig. 2 bzw. Fig. 7 befindet sich jeweils die Projektionswand bzw. das vergrößerte Bild links und das Objekt beziehungsweise das digitale Bildmedium rechts. In beiden Ausführungsbeispielen besteht das Projektionsobjektiv aus folgenden Elementen, in der Reihenfolge von der Leinwand zum DMD, also von links nach rechts:

a) einer ersten negativen Meniskuslinse 210 bzw. 710, deren konkave Oberfläche 212 bzw. 712 der Projektionswand abgewandt ist;

b) einer zweiten negativen Meniskus-Linse 216 bzw. 716, deren konkave Oberfläche 218 bzw. 718 der Projektionswand abgewandt ist;

c) einer dritten negativen bikonkaven Linse 222 bzw. 722, deren flachere konkave Oberfläche 220 bzw. 720 der Projektionswand zugewandt ist;

d) einer vierten positiven optischen Baugruppe 228 bzw. 728 mit einer ersten positiven Meniskus-Linse 232 bzw. 732 und einer zweiten Meniskus-Linse 238 bzw. 738, wobei die konvexe Oberfläche 230 bzw. 730 der ersten positiven Meniskus-Linse 232 bzw. 732 der positiven optischen Baugruppe 228 bzw. 728 der Projektionswand abgewandt ist, während die konvexe Oberfläche 236 bzw. 736 der zweiten Meniskus-Linse 238 bzw. 738 der positiven optischen Baugruppe 228 bzw. 728 der Projektionswand zugewandt ist;

e) einer fünften positiven Meniskuslinse 244 bzw. 744, deren konvexe Oberfläche 242 bzw. 742 der Projektionswand zugewandt ist;

f) einer sechsten negativen Meniskus-Linse 250 bzw. 750, deren konkave Oberfläche 252 bzw. 752 asphärisch gestaltet und der Projektionswand abgewandt ist; als asphärische Oberfläche kann auch die der Projektionswand zugewandte Oberfläche 248 bzw. 748 gewählt werden; in einer Variante geht es auch ohne asphärische Oberfläche;

g) einer Blende 254 bzw. 754;

h) einer siebenten positiven bikonvexen Linse 258 bzw. 758, deren flachere Oberfläche 256 bzw. 756 der Projektionswand zugewandt ist;

i) einer achten negativen Meniskus-Linse 262 bzw. 762, deren konkave Oberfläche 260 bzw. 760 der Projektionswand zugewandt ist;

j) einer neunten negativen bikonkaven Linse 268 bzw. 768, welche mit ihrer flacheren konkaven Fläche 266 bzw. 766 der Projektionswand zugewandt ist;

k) einer zehnten positiven bikonvexen Linse 274 bzw. 774, welche mit ihrer stärker gekrümmten Fläche 272 bzw. 772 zur Projektionswand weist;

l) einer elften positiven bikonvexen Linse 280 bzw. 780, welche mit ihrer stärker gekrümmten Fläche 278 bzw. 778 zur Projektionswand weist.

Die Linsen 258 und 262 bzw. 758 und 762 sind miteinander verkittet und bilden eine Dublette.

Von der Projektionswand her betrachtet hinter dem Projektionsobjektiv schließt sich ein optisch äquivalentes Modell eines Strahlvereinigers 286 bzw. 786 an, welcher eine optische Achse 290 bzw. 790 aufweist. Der Strahlvereiniger besteht aus den Segmenten 288 bzw. 788 und 292 bzw. 792. Er weist außerdem eine erste Oberfläche 294 bzw. 794 auf, weiterhin eine Grenzfläche 296 bzw. 796 zwischen den beiden Segmenten, sowie eine zweite Oberfläche 298 bzw. 798. Die optischen Weglängen innerhalb des Strahlvereinigers müssen bei der Berechnung der optischen Eigenschaften des Objektivs berücksichtigt werden, weshalb es zu Unterschieden zwischen der Schnittweite in Luft und der Schnittweite einschließlich Strahlvereiniger kommt.

Die genauen Angaben zu den einzelnen Oberflächen der optischen Elemente der beiden Ausführungsbeispiele gemäß Fig. 2 bzw. Fig. 7 finden sich in Tab. 1 bzw. Tab. 3 zusammen mit den jeweils zugehörigen Bezugsziffern.

In Tab. 2 und Tab. 4 sind die Asphärenkoeffizienten der Linsenoberflächen 252 bzw. 752 der Projektionsobjektive gemäß Fig. 2 und 7 aufgelistet. Die Oberfläche einer asphärischen Linse kann allgemein mit der folgenden Formel beschrieben werden:

$$z = \frac{Cy^2}{1+\sqrt{1-(1+K)\cdot C^2 y^2}} + Dy^4 + Ey^6 + Fy^8 + Gy^{10} + Hy^{12}$$

wobei

- z die Pfeilhöhe (in mm) in Bezug auf die achsensenkrechte Ebene angibt, also die Richtung der Abweichung von der Ebene senkrecht zur optischen Achse, d. h. in Richtung der optischen Achse
- C die sogenannte Scheitelkrümmung angibt. Sie dient zur Beschreibung der Krümmung einer konvexen oder konkaven Linsenoberfläche und errechnet sich aus dem Kehrwert des Radius.
- y den Abstand von der optischen Achse (in mm) angibt. y ist eine Radialkoordinate.
- K die sogenannte Konuskonstante angibt.
- D, E, F, G die sogenannten Asphärenkoeffizienten darstellen, die die Koeffizienten einer Polynomentwicklung der Funktion zur Beschreibung der Oberfläche der Asphäre sind.

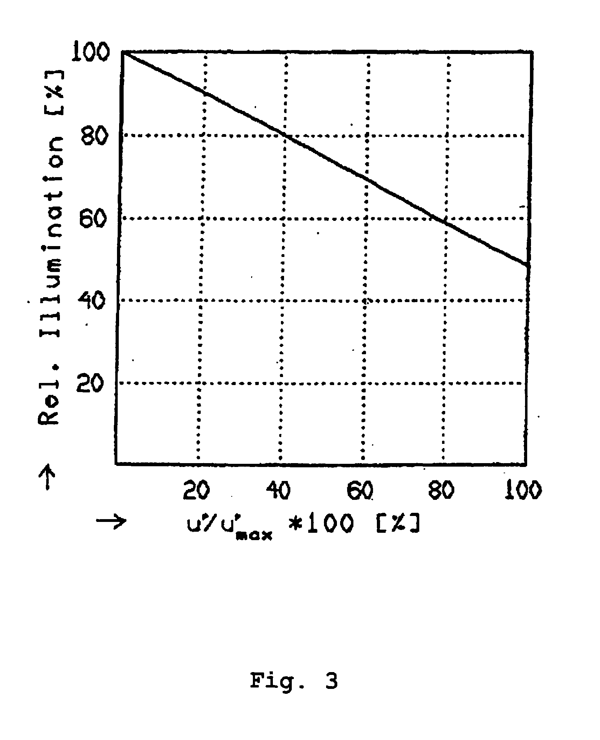

In den Figuren 3 bis 6 bzw. 8 bis 11 sind einige charakteristische Kenngrößen der Projektionsobjektive gemäß den beiden ersten Ausführungsbeispielen graphisch dargestellt.

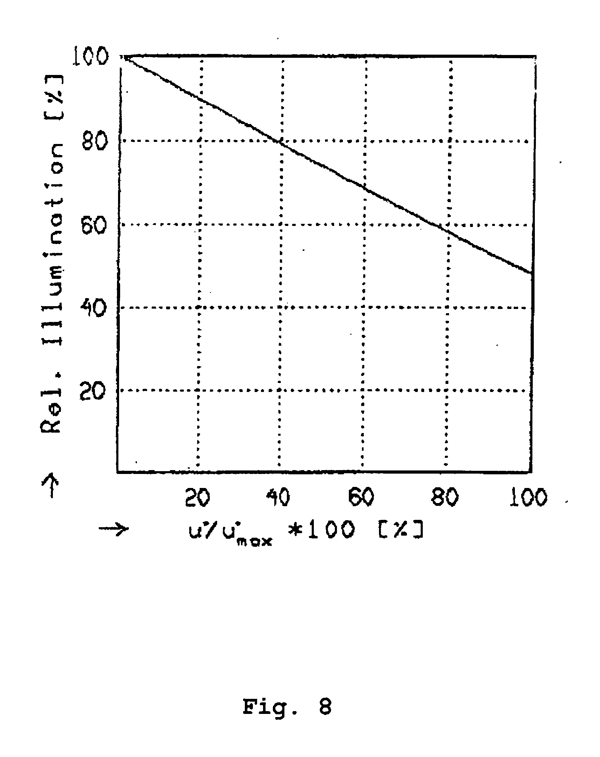

Fig. 3 bzw. Fig. 8 zeigt die relative Beleuchtungsstärke (Rel. Illumination) des vergrößerten Bildes verglichen mit dem Zentrum für das Projektionsobjektiv gemäß den ersten beiden Ausführungsbeispielen. Die x-Achse gibt die relative Abweichung vom Zentrum des zu vergrößernden Bildes an.

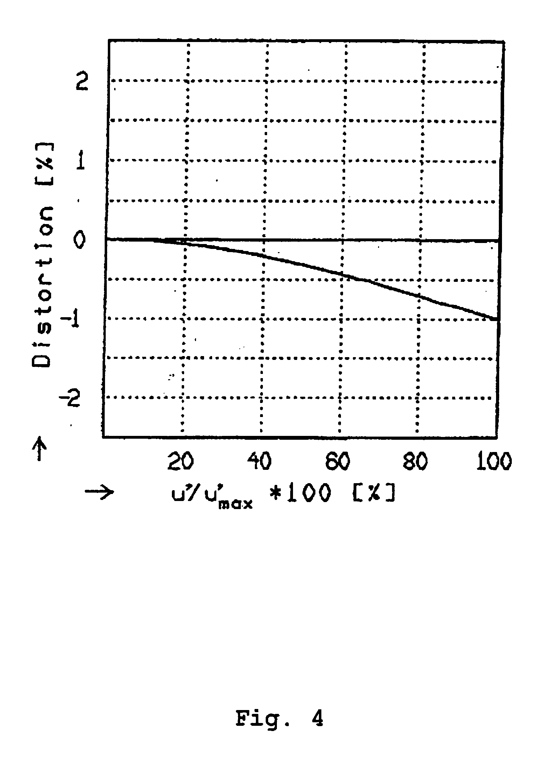

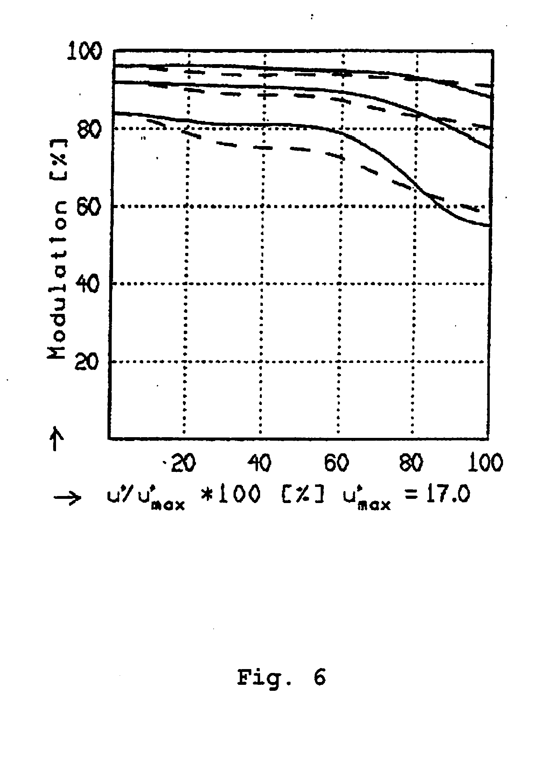

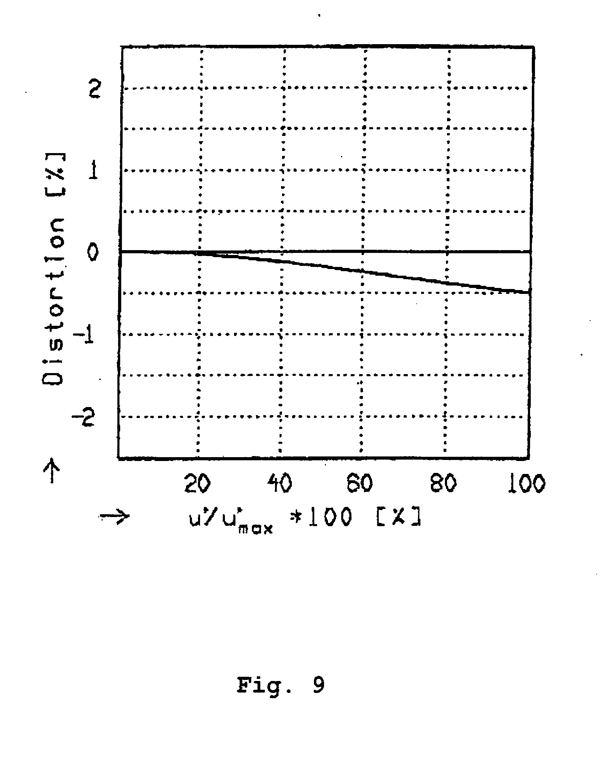

Fig. 4 bzw. Fig. 9 zeigt die Verzeichnung (Distortion) für das Projektionsobjektiv gemäß den Ausführungsbeispielen der Fig. 1 und 6 in Prozent (%) der Abweichung von der idealen Bildgröße.

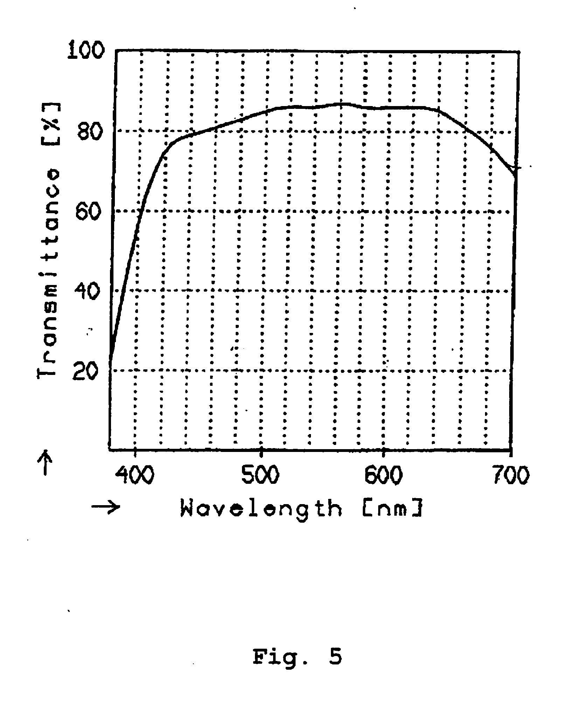

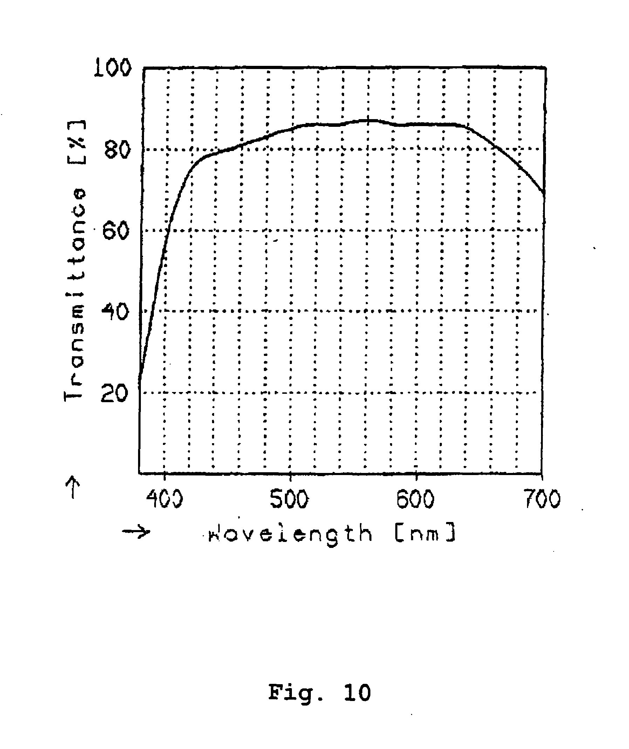

Fig. 5 bzw. Fig. 10 zeigt graphisch den Verlauf des Transmissionsgrads (Transmittance) in Prozent (%) für das Projektionsobjektiv gemäß den Ausführungsbeispielen der Fig. 2 bzw. 7 in Abhängigkeit von der Wellenlänge (Wavelength).

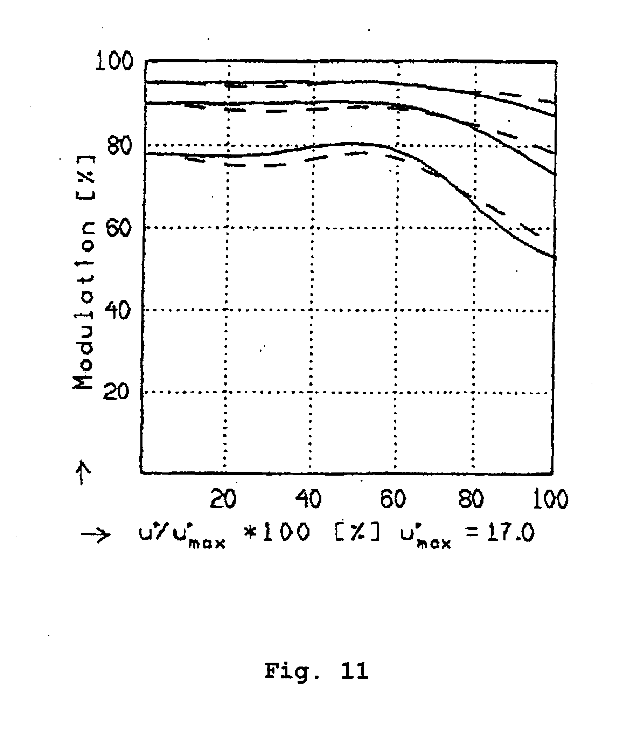

In Fig. 6 bzw. Fig. 11 ist die Auflösung (Modulation) der Projektionsobjektive der Fig. 2 bzw. Fig. 7 dargestellt. Die Auflösung wurde im Grünkanal berechnet. Dabei wurde folgende Gewichtung der Wellenlängen verwendet: 540 nm mit 25%, 490 nm mit 10%, 500 nm mit 15%, 520 nm mit 25%, 550 nm mit 15% und 560 nm mit 10%.

Gerechnet wurden drei Beispiele: Die oberen beiden Kurven gehören zu dem Beispiel mit einer Ortsfrequenz von 18 Linienpaaren pro mm (LP / mm), die mittleren beiden Kurven zu 36 LP / mm und die unteren beiden Kurven zu 72 LP / mm. Die durchgezogene Linie zeigt jeweils die Auflösung von radial verlaufenden Linienpaaren und die gestrichelte Linie die Auflösung von tangential verlaufenden Linienpaaren. Die x-Achse gibt die relative Abweichung vom Zentrum des DMD an. Auf der y-Achse ist die Modulationsübertragungsfunktion bei einer Blendenzahl k von 2,5 dargestellt. Die Modulation M an einem Ort berechnet sich gemäß:

$$M = \frac{I_{max} - I_{min}}{I_{max} + I_{min}}$$

wobei $I_{max}$ bzw. $I_{min}$ die Licht-Intensität des Bildes der Linienpaare im Maximum bzw. Minimum ist. Als Abbildungsentfernung wurde 15 m dargestellt. Die Auflösung der Projektionsobjektive gemäß den beiden ersten Ausführungsbeispielen entspricht der Auflösung sehr guter Projektionsobjektive.

Ausführungsbeispiel 3:

Bei dem in Fig. 12 dargestellten dritten Ausführungsbeispiel handelt es sich um ein Projektionsobjektiv mit einer Brennweite von 60 mm und einer Blendenzahl von ebenfalls 2,5. In diesem Ausführungsbeispiel gemäß Fig. 12 weist das Projektionsobjektiv einen veränderten Aufbau in Bezug auf die ersten beiden Ausführungsbeispiele auf.

Im dritten vorteilhaften Ausführungsbeispiel besteht das Projektionsobjektiv aus folgenden Elementen, in der Reihenfolge vom vergrößerten Bild zum Gegenstand, also von links nach rechts:

a) einer ersten negativen Meniskuslinse 1210, deren konkave Oberfläche 1212 der Projektionswand abgewandt ist;
b) einer zweiten negativen Meniskus-Linse 1216, deren konkave Oberfläche 1218 der Projektionswand abgewandt ist;

c) einer dritten negativen Meniskus-Linse 1222, deren konkave Oberfläche 1220 der Projektionswand zugewandt ist;
d) einer vierten positiven optischen Baugruppe 1228, welches in diesem Ausführungsbeispiel nur eine positive bikonvexe Linse 1232 aufweist, wobei die flachere konvexe Oberfläche 1230 der Projektionswand zugewandt ist;
e) einer fünften positiven Meniskuslinse 1238, deren konvexe Oberfläche 1236 der Projektionswand zugewandt ist;
f) einer sechsten negativen Meniskus-Linse 1244, deren konkave Oberfläche 1246 asphärisch gestaltet und der Projektionswand abgewandt ist; als asphärische Oberfläche kann auch die der Projektionswand zugewandte Oberfläche 1242 gewählt werden; in einer Variante geht es auch ohne asphärische Oberfläche;
g) einer Blende 1254;
h) einer siebenten positiven Meniskuslinse Linse 1258, deren konkave Oberfläche 1256 der Projektionswand zugewandt ist;
i) einer achten negativen Meniskus-Linse 1262, deren konkave Oberfläche 1260 der Projektionswand zugewandt ist;
j) einer neunten negativen bikonkaven Linse 1268, welche mit ihrer flacheren konkaven Fläche 1266 der Projektionswand zugewandt ist;
k) einer zehnten positiven bikonvexen Linse 1274, welche mit ihrer stärker gekrümmten Fläche 1272 zur Projektionswand weist;
l) einer elften positiven bikonvexen Linse 1280, welche mit ihrer stärker gekrümmten Fläche 1278 zur Projektionswand weist.

Die Linsen 1258 und 1262 sind miteinander verkittet und bilden eine Dublette.

Von der Projektionswand her betrachtet hinter dem Projektionsobjektiv schließt sich ein optisch äquivalentes Modell eines Strahlvereinigers 1286 an, welcher eine optische Achse 1290 aufweist. Der Strahlvereiniger besteht aus den Segmenten 1288 und 1292. Er weist außerdem eine erste Oberfläche 1294 auf, weiterhin eine Grenzfläche 1296 zwischen den beiden Segmenten, sowie eine zweite Oberfläche 1298.

Die genauen Angaben zu den einzelnen Oberflächen der optischen Elemente des Ausführungsbeispiels gemäß Fig. 12 finden sich in Tab. 5 zusammen mit den jeweils zugehörigen Bezugsziffern.

In Tab. 6 sind die Asphärenkoeffizienten der Linsenoberflächen 1246 des Projektionsobjektivs gem. Fig. 12 aufgelistet.

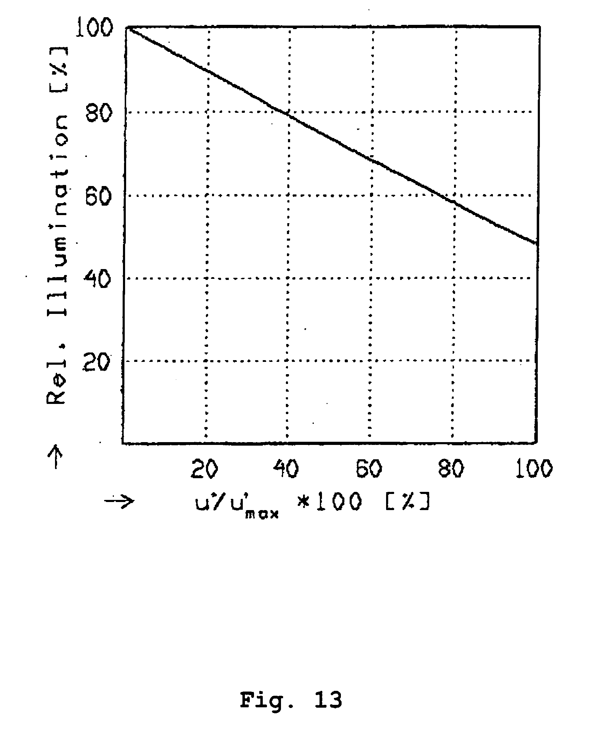

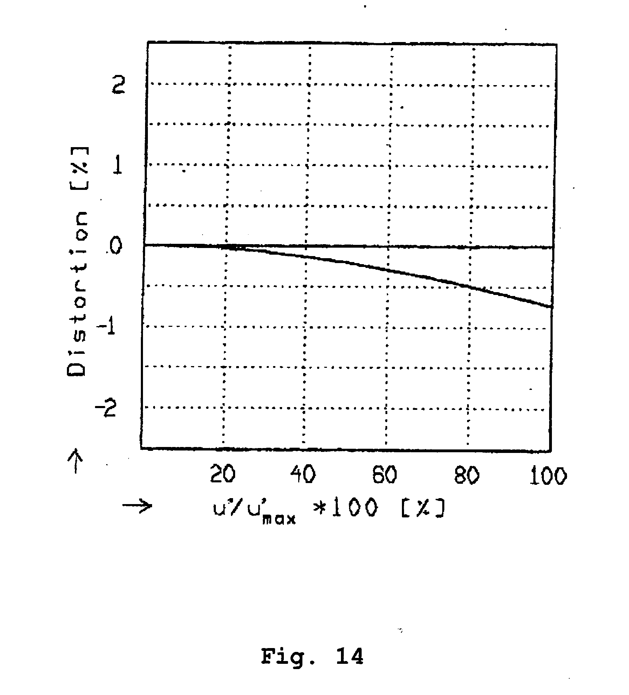

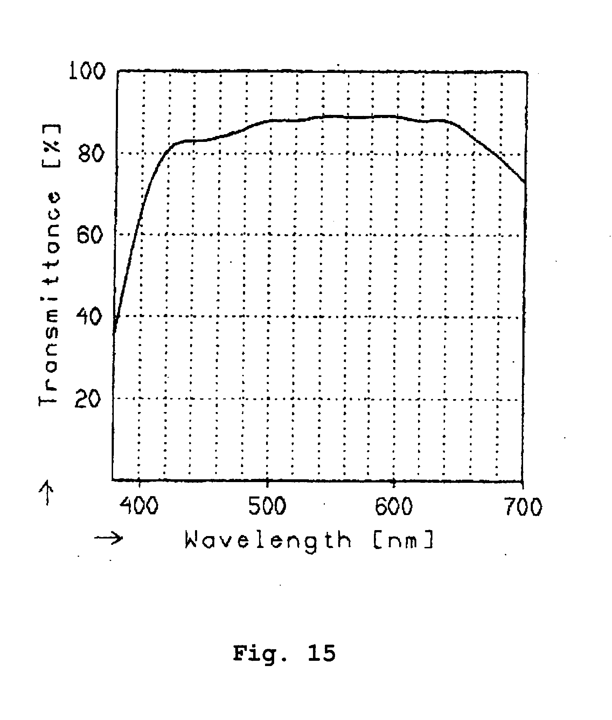

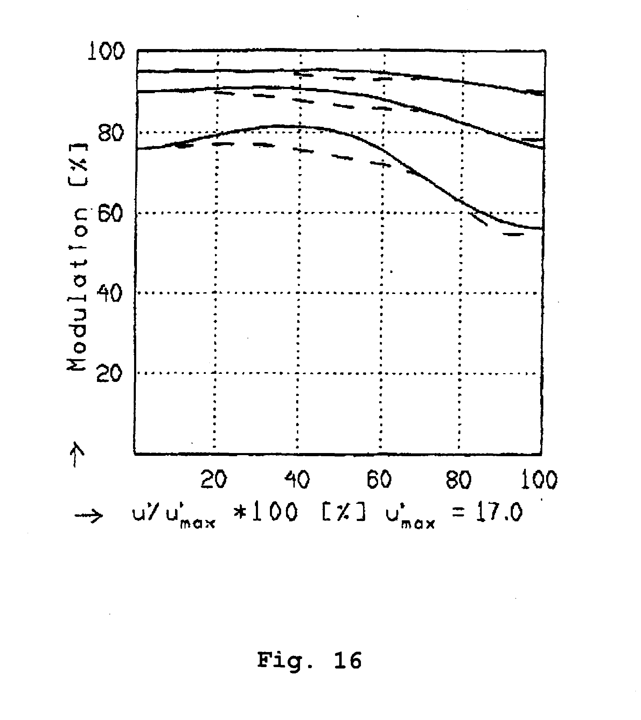

In den Figuren 13 bis 16 sind entsprechend den Figuren 8 bis 11 einige charakteristische Kenngrößen für das 60 mm Projektionsobjektiv gemäß dem dritten Ausführungsbeispiel (Fig. 12), wie die relative Beleuchtungsstärke(Rel. Illumination, Fig. 13), die Verzeichnung (Distortion, Fig. 14), der Verlauf des Transmissionsgrads (Transmittance, Fig. 15) sowie die Auflösung (Modulation, Fig. 16), graphisch dargestellt.

Ausführungsbeispiel 4

Bei dem in Fig. 17 dargestellten vierten Ausführungsbeispiel handelt es sich um ein Projektionsobjektiv analog dem zweiten Ausführungsbeispiel gemäß Fig. 7, jedoch zusätzlich ist dieses Projektionsobjektiv mit einem Brennweitenverlängerer ausgestattet, der zwischen der Linse 750 bzw. 1750 und der Linse 758 bzw. 1780 eingefügt wurde.

Das Projektionsobjektiv in diesem Ausführungsbeispiel besteht vorteilhafterweise aus folgenden Elementen, in der Reihenfolge vom vergrößerten Bild zum DMD, also von links nach rechts:

a) zunächst sieben Linsen, die mit den ersten sieben Linsen des Projektionsobjektivs gemäß Fig. 7 identisch sind;
b) einem Brennweitenverlängerer 1755 mit

- einer Blende 1754;
- einer ersten negativen Linse 1758, vorzugsweise einer bikonkaven Linse, wobei vorzugsweise deren stärker konkave Oberfläche 1760 der Projektionswand abgewandt ist;
- einer zweiten positiven bikonvexen Linse 1764, wobei deren stärker gekrümmte Oberfläche 1762 der Projektionswand zugewandt ist;
- einer dritten negativen bikonkaven Linse 1770, wobei deren flachere Oberfläche 1768 der Projektionswand zugewandt ist;
- einer vierten positiven bikonvexen Linse 1776, wobei deren flachere konvexe Oberfläche 1774 der Projektionswand zugewandt ist;
- einer fünften negativen Meniskus-Linse 1780, wobei deren konkave Oberfläche 1778 der Projektionswand zugewandt ist;

c) die weiteren Linsen sind wiederum identisch mit den entsprechenden Linsen des zweiten Ausführungsbeispiels gemäß Fig. 7. Gleiches gilt für den Strahlvereiniger 17110.

Die genauen Angaben zu den einzelnen Oberflächen der optischen Elemente des Ausführungsbeispiels gemäß Fig. 17 finden sich in Tab. 7 zusammen mit den jeweils zugehörigen Bezugsziffern. In Tab. 8 sind die Asphärenkoeffizienten der Linsenoberfläche 1752 aufgelistet, die identisch sind mit denen des zweiten Ausführungsbeispiels gemäß Fig. 7 bzw. Tab. 4.

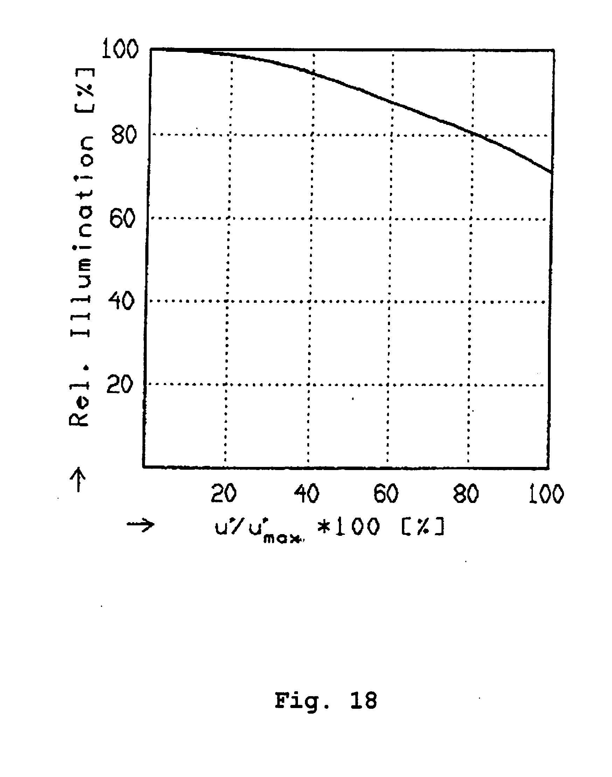

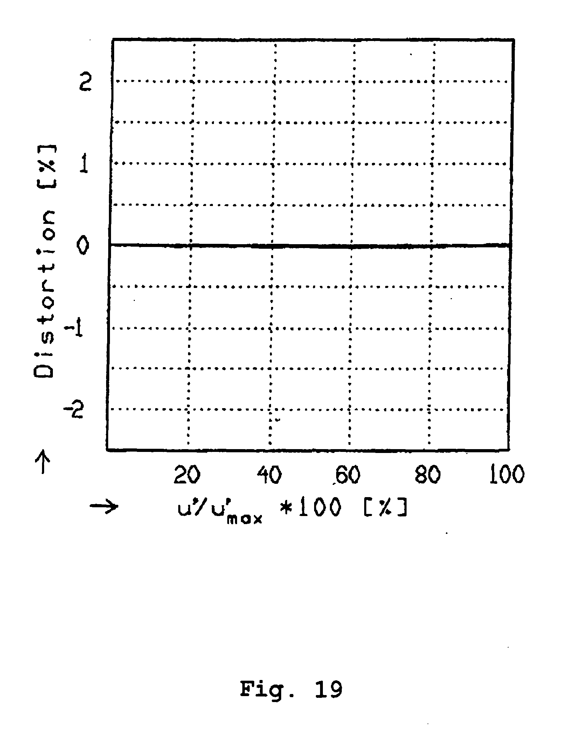

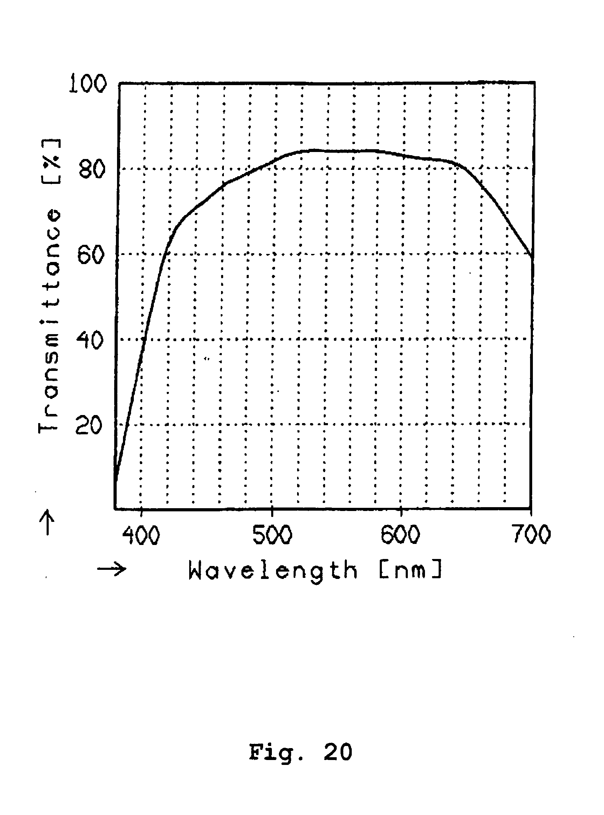

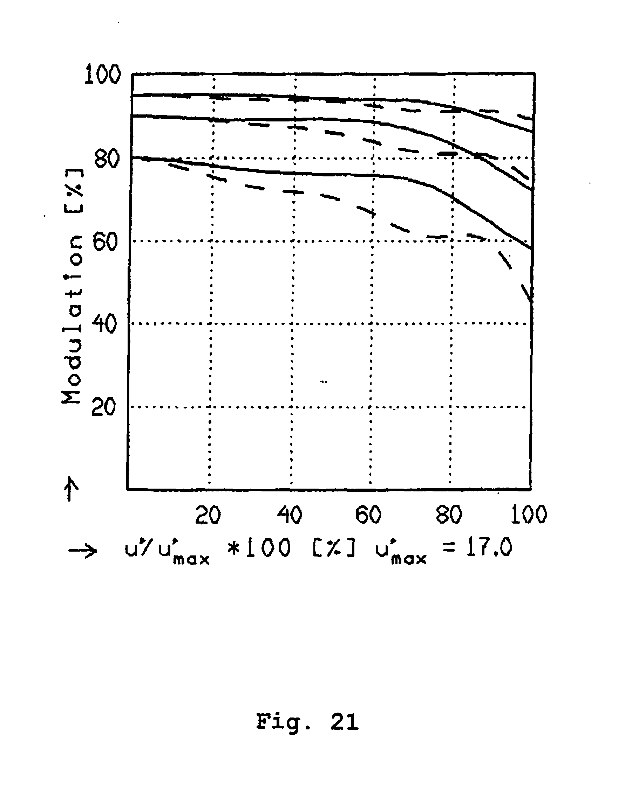

In den Figuren 18 bis 21 sind entsprechend den Figuren 8 bis 11 einige charakteristische Kenngrößen für das Projektionsobjektiv gemäß dem vierten Ausführungsbeispiel (Fig. 17), wie die relative Beleuchtungsstärke(Rel. Illumination, Fig. 18), die Verzeichnung (Distortion, Fig. 19), der Verlauf des Transmissionsgrads (Transmittance, Fig. 20) sowie die Auflösung (Modulation, Fig. 21), graphisch dargestellt.

Ausführungsbeispiel 5

Bei dem in Fig. 22 dargestellten fünften Ausführungsbeispiel handelt es sich um ein Projektionsobjektiv analog dem dritten Ausführungsbeispiel gemäß Fig. 12, jedoch zusätzlich ist dieses Projektionsobjektiv mit einem Brennweitenverlängerer ausgestattet, der zwischen der Linse 1244 bzw. 2244 und der Linse 1258 bzw. 2280 eingefügt wurde.

Das Projektionsobjektiv in diesem Ausführungsbeispiel besteht vorteilhafterweise aus folgenden Elementen, in der Reihenfolge vom vergrößerten Bild zum DMD, also von links nach rechts:

a) zunächst sechs Linsen, die mit den ersten sechs Linsen des Projektionsobjektivs gemäß Fig. 12 identisch sind;
b) einem Brennweitenverlängerer 2247 mit

- einer ersten negativen bikonkaven Linse 2250, wobei deren stärker gekrümmte konkave Oberfläche 2252 der Projektionswand abgewandt ist, und wobei die der Projektionswand zugewandte konkave Oberfläche 2248 asphärisch gestaltet ist;
- einer zweiten positiven bikonvexen Linse 2256, wobei deren stärker gekrümmte konvexe Oberfläche 2254 der Projektionswand zugewandt ist;
- einer Blende 2260;
- einer dritten positiven Meniskus-Linse 2264, wobei deren konvexe Oberfläche 2262 der Projektionswand zugewandt ist;
- einer vierten negativen Meniskus-Linse 2268, wobei deren konvexe Oberfläche 2266 der Projektionswand zugewandt ist;
- einer fünften negativen bikonkaven Linse 2274, wobei deren stärker gekrümmte konkave Oberfläche 2272 der Projektionswand zugewandt ist;

c) die weiteren Linsen sind wiederum identisch mit den entsprechenden Linsen des dritten Ausführungsbeispiels gemäß Fig. 12. Gleiches gilt für den Strahlvereiniger 22106.

Die Linsen 2264 und 2268 sind miteinander verkittet und bilden eine Dublette.

Die genauen Angaben zu den einzelnen Oberflächen der optischen Elemente des Ausführungsbeispiels gemäß Fig. 22 finden sich in Tab. 9 zusammen mit den jeweils zugehörigen Bezugsziffern. In Tab. 10 sind die Asphärenkoeffizienten der Linsenoberfläche 2248 aufgelistet. Die Asphärenkoeffizienten der Linsenoberfläche 2246 entsprechen denen der Tab. 6.

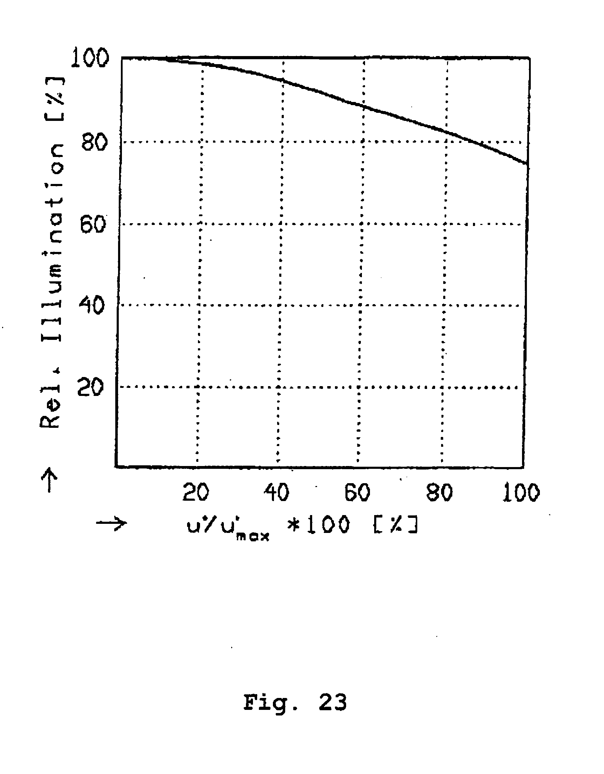

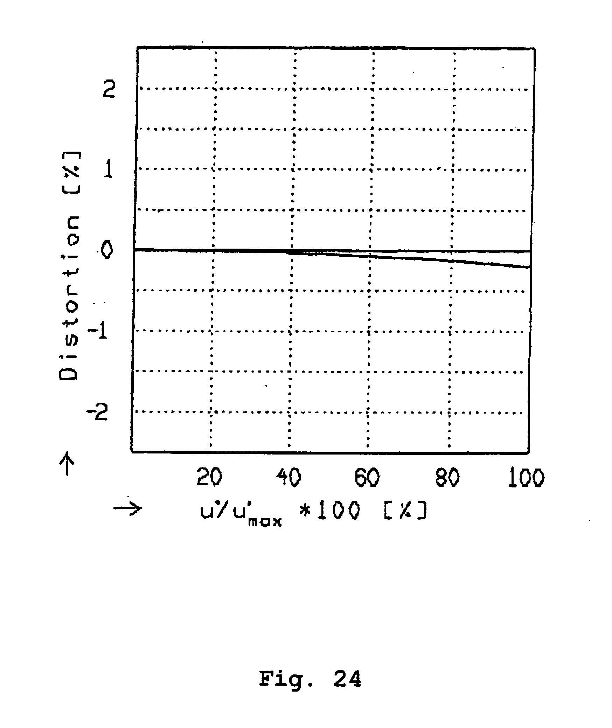

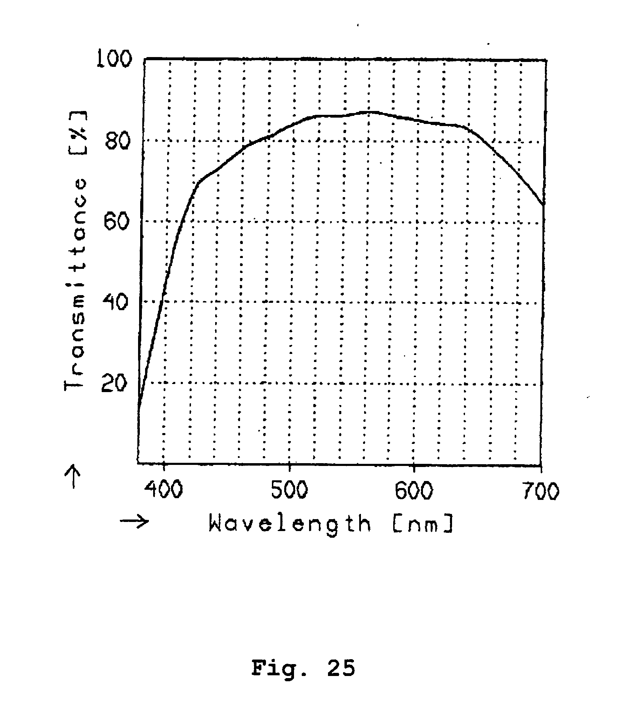

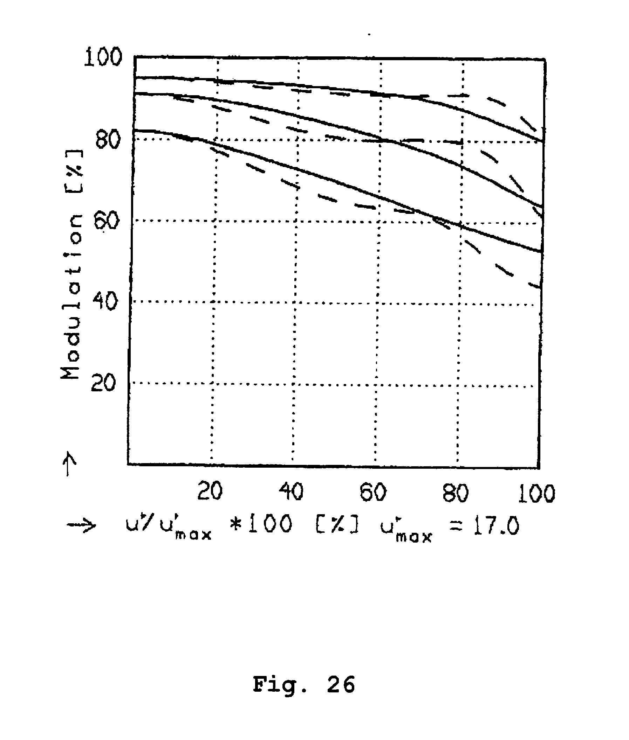

In den Figuren 23 bis 26 sind entsprechend den Figuren 8 bis 11 einige charakteristische Kenngrößen für das Projektionsobjektiv gemäß dem fünften Ausführungsbeispiel (Fig. 22), wie die relative Beleuchtungsstärke(Rel. Illumination, Fig. 23), die Verzeichnung (Distortion, Fig. 24), der Verlauf des Transmissionsgrads (Transmittance, Fig. 25) sowie die Auflösung (Modulation, Fig. 26), graphisch dargestellt.

Bezugszeichen

| | |
|---|---|
| 208 | 1. Oberfläche der Linse 210 |
| 210 | negative Meniskuslinse |
| 212 | 2. Oberfläche der Linse 210 |
| 214 | 1. Oberfläche der Linse 216 |
| 216 | negative Meniskuslinse |
| 218 | 2. Oberfläche der Linse 216 |
| 220 | 1. Oberfläche der Linse 222 |
| 222 | negative bikonkave Linse |

| | |
|---|---|
| 224 | 2. Oberfläche der Linse 222 |
| 228 | positive optische Baugruppe |
| 230 | 1. Oberfläche der Linse 232 |
| 232 | positive Meniskuslinse |
| 234 | 2. Oberfläche der Linse 232 |
| 236 | 1. Oberfläche der Linse 238 |
| 238 | Meniskuslinse |
| 240 | 2. Oberfläche der Linse 238 |
| 242 | 1. Oberfläche der Linse 244 |
| 244 | positive Meniskuslinse |
| 246 | 2. Oberfläche der Linse 244 |
| 248 | 1. Oberfläche der Linse 250 |
| 250 | negative Meniskuslinse |
| 252 | 2. Oberfläche der Linse 250 |
| 254 | Blende |
| 256 | 1. Oberfläche der Linse 258 |
| 258 | positive bikonvexe Linse |
| 260 | 2. Oberfläche der Linse 258 / 1. Oberfläche der Linse 262 |
| 262 | negative Meniskuslinse |
| 264 | 2. Oberfläche der Linse 262 |
| 266 | 1. Oberfläche der Linse 268 |
| 268 | negative bikonkave Linse |
| 270 | 2. Oberfläche der Linse 268 |
| 272 | 1. Oberfläche der Linse 274 |
| 274 | positive bikonvexe Linse |
| 276 | 2. Oberfläche der Linse 274 |
| 278 | 1. Oberfläche der Linse 280 |
| 280 | positive bikonvexe Linse |
| 282 | 2. Oberfläche der Linse 280 |
| 286 | Strahlvereiniger |
| 288 | 1. Segment des Strahlvereinigers |
| 290 | optische Achse des Strahlvereinigers |
| 292 | 2. Segment des Strahlvereinigers |
| 294 | 1. Oberfläche des Strahlvereinigers |
| 296 | Grenzfläche des Strahlvereinigers |
| 298 | 2. Oberfläche des Strahlvereinigers |
| 708 | 1. Oberfläche der Linse 710 |
| 710 | negative Meniskuslinse |
| 712 | 2. Oberfläche der Linse 710 |
| 714 | 1. Oberfläche der Linse 716 |
| 716 | negative Meniskuslinse |
| 718 | 2. Oberfläche der Linse 716 |
| 720 | 1. Oberfläche der Linse 722 |
| 722 | negative bikonkave Linse |
| 724 | 2. Oberfläche der Linse 722 |
| 728 | positive optische Baugruppe |
| 730 | 1. Oberfläche der Linse 732 |
| 732 | positive Meniskuslinse |
| 734 | 2. Oberfläche der Linse 732 |
| 736 | 1. Oberfläche der Linse 738 |
| 738 | Meniskuslinse |
| 740 | 2. Oberfläche der Linse 738 |
| 742 | 1. Oberfläche der Linse 744 |
| 744 | positive Meniskuslinse |
| 746 | 2. Oberfläche der Linse 744 |
| 748 | 1. Oberfläche der Linse 750 |
| 750 | negative Meniskuslinse |
| 752 | 2. Oberfläche der Linse 750 |

| 754 | Blende |
| 756 | 1. Oberfläche der Linse 758 |
| 758 | positive bikonvexe Linse |
| 760 | 2. Oberfläche der Linse 758 / 1. Oberfläche der Linse 762 |
| 762 | negative Meniskuslinse |
| 764 | 2. Oberfläche der Linse 762 |
| 766 | 1. Oberfläche der Linse 768 |
| 768 | negative bikonkave Linse |
| 770 | 2. Oberfläche der Linse 768 |
| 772 | 1. Oberfläche der Linse 774 |
| 774 | positive bikonvexe Linse |
| 776 | 2. Oberfläche der Linse 774 |
| 778 | 1. Oberfläche der Linse 780 |
| 780 | positive bikonvexe Linse |
| 782 | 2. Oberfläche der Linse 780 |
| 786 | Strahlvereiniger |
| 788 | 1. Segment des Strahlvereinigers |
| 790 | optische Achse des Strahlvereinigers |
| 792 | 2. Segment des Strahlvereinigers |
| 794 | 1. Oberfläche des Strahlvereinigers |
| 796 | Grenzfläche des Strahlvereinigers |
| 798 | 2. Oberfläche des Strahlvereinigers |
| 1208 | 1. Oberfläche der Linse 1210 |
| 1210 | negative Meniskuslinse |
| 1212 | 2. Oberfläche der Linse 1210 |
| 1214 | 1. Oberfläche der Linse 1216 |
| 1216 | negative Meniskuslinse |
| 1218 | 2. Oberfläche der Linse 1216 |
| 1220 | 1. Oberfläche der Linse 1222 |
| 1222 | negative Meniskuslinse |
| 1224 | 2. Oberfläche der Linse 1222 |
| 1228 | positive optische Baugruppe |
| 1230 | 1. Oberfläche der Linse 1232 |
| 1232 | positive bikonvexe Linse |
| 1234 | 2. Oberfläche der Linse 1232 |
| 1236 | 1. Oberfläche der Linse 1238 |
| 1238 | positive Meniskuslinse |
| 1240 | 2. Oberfläche der Linse 1238 |
| 1242 | 1. Oberfläche der Linse 1244 |
| 1244 | negative Meniskuslinse |
| 1246 | 2. Oberfläche der Linse 1244 |
| 1254 | Blende |
| 1256 | 1. Oberfläche der Linse 1258 |
| 1258 | positive Meniskuslinse |
| 1260 | 2. Oberfläche der Linse 1258 / 1. Oberfläche der Linse 1262 |
| 1262 | negative Meniskuslinse |
| 1264 | 2. Oberfläche der Linse 1262 |
| 1266 | 1. Oberfläche der Linse 1266 |
| 1268 | negative bikonkave Linse |
| 1270 | 2. Oberfläche der Linse 1266 |
| 1272 | 1. Oberfläche der Linse 1274 |
| 1274 | positive bikonvexe Linse |
| 1276 | 2. Oberfläche der Linse 1274 |
| 1278 | 1. Oberfläche der Linse 1280 |
| 1280 | positive bikonvexe Linse |
| 1282 | 2. Oberfläche der Linse 1280 |
| 1286 | Strahlvereiniger |
| 1288 | 1. Segment des Strahlvereinigers |

| | |
|---|---|
| 1290 | optische Achse des Strahlvereinigers |
| 1292 | 2. Segment des Strahlvereinigers |
| 1294 | 1. Oberfläche des Strahlvereinigers |
| 1296 | Grenzfläche des Strahlvereinigers |
| 1298 | 2. Oberfläche des Strahlvereinigers |
| 1708 | 1. Oberfläche der Linse 1710 |
| 1710 | negative Meniskuslinse |
| 1712 | 2. Oberfläche der Linse 1710 |
| 1714 | 1. Oberfläche der Linse 1716 |
| 1716 | negative Meniskuslinse |
| 1718 | 2. Oberfläche der Linse 1716 |
| 1720 | 1. Oberfläche der Linse 1722 |
| 1722 | negative bikonkave Linse |
| 1724 | 2. Oberfläche der Linse 1722 |
| 1728 | positive optische Baugruppe |
| 1730 | 1. Oberfläche der Linse 1732 |
| 1732 | positive Meniskuslinse |
| 1734 | 2. Oberfläche der Linse 1732 |
| 1736 | 1. Oberfläche der Linse 1738 |
| 1738 | positive Meniskuslinse |
| 1740 | 2. Oberfläche der Linse 1738 |
| 1742 | 1. Oberfläche der Linse 1744 |
| 1744 | positive Meniskuslinse |
| 1746 | 2. Oberfläche der Linse 1744 |
| 1748 | 1. Oberfläche der Linse 1750 |
| 1750 | negative Meniskuslinse |
| 1752 | 2. Oberfläche der Linse 1750 |
| 1754 | Blende |
| 1755 | Brennweitenverlängerer |
| 1756 | 1. Oberfläche der Linse 1758 |
| 1758 | negative Meniskuslinse |
| 1760 | 2. Oberfläche der Linse 1758 |
| 1762 | 1. Oberfläche der Linse 1764 |
| 1764 | positive bikonvexe Linse |
| 1766 | 2. Oberfläche der Linse 1764 |
| 1768 | 1. Oberfläche der Linse 1770 |
| 1770 | negative bikonkave Linse |
| 1772 | 2. Oberfläche der Linse 1770 |
| 1774 | 1. Oberfläche der Linse 1774 |
| 1776 | positive bikonvexe Linse |
| 1778 | 2. Oberfläche der Linse 1774 / 1.Oberfläche der Linse 1780 |
| 1780 | negative Meniskuslinse |
| 1782 | 2. Oberfläche der Linse 1780 |
| 1784 | 1. Oberfläche der Linse 1786 |
| 1786 | positive bikonvexe Linse |
| 1788 | 2. Oberfläche der Linse 1786 / 1. Oberfläche der Linse 1790 |
| 1790 | negative Meniskuslinse |
| 1792 | 2. Oberfläche der Linse 1762 |
| 1794 | 1. Oberfläche der Linse 1796 |
| 1796 | negative bikonkave Linse |
| 1798 | 2. Oberfläche der Linse 1796 |
| 17100 | 1. Oberfläche der Linse 17102 |
| 17102 | positive bikonvexe Linse |
| 17103 | 2. Oberfläche der Linse 17102 |
| 17104 | 1. Oberfläche der Linse 17106 |
| 17106 | positive bikonvexe Linse |
| 17108 | 2. Oberfläche der Linse 17106 |
| 17110 | Strahlvereiniger |

| 17112 | optische Achse des Strahlvereinigers |
| 17114 | 1. Segment des Strahlvereinigers |
| 17116 | 2. Segment des Strahlvereinigers |
| 17118 | 1. Oberfläche des Strahlvereinigers |
| 17120 | Grenzfläche des Strahlvereinigers |
| 17122 | 2. Oberfläche des Strahlvereinigers |
| 2208 | 1. Oberfläche der Linse 2210 |
| 2210 | negative Meniskuslinse |
| 2212 | 2. Oberfläche der Linse 2210 |
| 2214 | 1. Oberfläche der Linse 2216 |
| 2216 | negative Meniskuslinse |
| 2218 | 2. Oberfläche der Linse 2216 |
| 2220 | 1. Oberfläche der Linse 2222 |
| 2222 | negative Meniskuslinse |
| 2224 | 2. Oberfläche der Linse 2222 |
| 2228 | positive optische Baugruppe |
| 2230 | 1. Oberfläche der Linse 2232 |
| 2232 | positive bikonvexe Linse |
| 2234 | 2. Oberfläche der Linse 2232 |
| 2236 | 1. Oberfläche der Linse 2238 |
| 2238 | positive Meniskuslinse |
| 2240 | 2. Oberfläche der Linse 2238 |
| 2242 | 1. Oberfläche der Linse 2244 |
| 2244 | negative Meniskuslinse |
| 2246 | 2. Oberfläche der Linse 2244 |
| 2247 | Brennweitenverlängerer |
| 2248 | 1. Oberfläche der Linse 2250 |
| 2250 | negative bikonkave Linse |
| 2252 | 2. Oberfläche der Linse 2250 |
| 2254 | 1. Oberfläche der Linse 2256 |
| 2256 | positive bikonvexe Linse |
| 2258 | 2. Oberfläche der Linse 2256 |
| 2260 | Blende |
| 2262 | 1. Oberfläche der Linse 2264 |
| 2264 | positive Meniskuslinse |
| 2266 | 2. Oberfläche der Linse 2264 / 1. Oberfläche der Linse 2268 |
| 2268 | negative Meniskuslinse |
| 2270 | 2. Oberfläche der Linse 2268 |
| 2272 | 1. Oberfläche der Linse 2274 |
| 2274 | negative bikonkave Linse |
| 2276 | 2. Oberfläche der Linse 2274 |
| 2278 | 1. Oberfläche der Linse 2280 |
| 2280 | positive Meniskuslinse |
| 2282 | 2. Oberfläche der Linse 2280 / 1. Oberfläche der Linse 2284 |
| 2284 | negative Meniskuslinse |
| 2286 | 2. Oberfläche der Linse 2284 |
| 2288 | 1. Oberfläche der Linse 2290 |
| 2290 | negative bikonkave Linse |
| 2292 | 2. Oberfläche der Linse 2290 |
| 2294 | 1. Oberfläche der Linse 2296 |
| 2296 | positive bikonvexe Linse |
| 2298 | 2. Oberfläche der Linse 2296 |
| 22100 | 1. Oberfläche der Linse 22102 |
| 22102 | positive bikonvexe Linse |
| 22104 | 2. Oberfläche der Linse 22102 |
| 22106 | Strahlvereiniger |
| 22108 | 1. Segment des Strahlvereinigers |
| 22110 | optische Achse des Strahlvereinigers |

22112  2. Segment des Strahlvereinigers
22114  1. Oberfläche des Strahlvereinigers
22116  Grenzfläche des Strahlvereinigers
22118  2. Oberfläche des Strahlvereinigers

Tab. 1

| Brennweite = 44 mm, Blendenzahl = 2,5 | | | | |
|---|---|---|---|---|
| Bezugszeichen | Radius / mm | Dicken bzw. Luftabstände / mm | Brechzahl nd | Abbe'-Zahl vd |
| 208 | 120,648 | | | |
| 210 | | 7,300 | 1,7552 | 27,5 |
| 212 | 91,484 | | | |
| | | 13,000 | | |
| 214 | 313,438 | | | |
| 216 | | 6,000 | 1,4339 | 95,0 |
| 218 | 74,331 | | | |
| | | 44,830 | | |
| 220 | -1689,208 | | | |
| 222 | | 6,000 | 1,4339 | 95,0 |
| 224 | 72,538 | | | |
| | | 39,430 | | |
| 230 | -346,584 | | | |
| 232 | | 25,000 | 1,4875 | 70,4 |
| 234 | -77,586 | | | |
| | | 17,980 | | |
| 236 | 45,620 | | | |
| 238 | | 5,300 | 1,4339 | 95,0 |
| 240 | 45,620 | | | |
| | | 7,000 | | |
| 242 | 64,828 | | | |
| 244 | | 7,450 | 1,5584 | 54,0 |
| 246 | 155,028 | | | |
| | | 25,000 | | |
| 248 | 82,972 | | | |
| 250 | | 5,720 | 1,4339 | 95,0 |
| 252 | 31,829 (*) | | | |
| | | 75,55 | | |
| 256 | 505,311 | | | |
| 258 | | 20,570 | 1,5691 | 71,3 |
| 260 | -40,218 | | | |
| 262 | | 17,340 | 1,6134 | 44,5 |
| 264 | -66,405 | | | |

(fortgesetzt)

| Bezugszeichen | Radius / mm | Dicken bzw. Luftabstände / mm | Brechzahl nd | Abbe'-Zahl vd |
|---|---|---|---|---|
| | | 8,368 | | |
| 266 | -1689.,208 | | | |
| 268 | | 4,940 | 1,6134 | 44,5 |
| 270 | 53,566 | | | |
| | | 5,000 | | |
| 272 | 61,547 | | | |
| 274 | | 11,700 | 1,4339 | 95,0 |
| 276 | -160,546 | | | |
| | | 0,120 | | |
| 278 | 102,632 | | | |
| 280 | | 7,700 | 1,4339 | 95,0 |
| 282 | -638,036 | | | |
| | | 12,000 | | |
| 294 | 0,000 | | | |
| 288 | | 116,500 | 1,5168 | 64,2 |
| 296 | 0,000 | | | |
| 292 | | 3,000 | 1,5085 | 61,2 |
| 298 | 0,000 | 0,000 | | |
| (*) asphärisch | | | | |

Tab. 2

| Asphärenkoeffizienten: | |
|---|---|
| K (Konuskonstante) | 0 |
| C | 0,0314179 |
| D | $0,500000*10^{-7}$ |
| E | $-0,150000*10^{-9}$ |
| F | 0 |
| G | 0 |
| H | 0 |

Tab. 3

| Brennweite = 48 mm, Blendenzahl = 2,5 | | | | |
|---|---|---|---|---|
| Bezugszeichen | Radius / mm | Dicken bzw. Luftabstände / mm | Brechzahl nd | Abbe'-Zahl vd |
| 708 | 120,648 | | | |
| 710 | | 7,550 | 1,7552 | 27,5 |
| 712 | 91,484 | | | |
| | | 10,000 | | |

(fortgesetzt)

| Brennweite = 48 mm, Blendenzahl = 2,5 | | | | |
|---|---|---|---|---|
| Bezugzeichen | Radius / mm | Dicken bzw. Luftabstände / mm | Brechzahl nd | Abbe'-Zahl vd |
| 714 | 313,438 | | | |
| 716 | | 6,000 | 1,4339 | 95,0 |
| 718 | 74,331 | | | |
| | | 25,000 | | |
| 720 | -1689,208 | | | |
| 722 | | 6,000 | 1,4339 | 95,0 |
| 724 | 72,538 | | | |
| | | 37,000 | | |
| 730 | -346,584 | | | |
| 732 | | 25,000 | 1,4875 | 70,4 |
| 734 | -77,586 | | | |
| | | 16,377 | | |
| 736 | 45,620 | | | |
| 738 | | 5,300 | 1,4339 | 95,0 |
| 740 | 45,620 | | | |
| | | 5,000 | | |
| 742 | 64,828 | | | |
| 744 | | 7,450 | 1,5584 | 54,0 |
| 746 | 155,028 | | | |
| | | 25,757 | | |
| 748 | 82,972 | | | |
| 750 | | 5,720 | 1,4339 | 95,0 |
| 752 | 31,829 (*) | | | |
| | | 72,88 | | |
| 756 | 460,206 | | | |
| 758 | | 20,570 | 1,5691 | 71,3 |
| 760 | -41,253 | | | |
| 762 | | 17,340 | 1,6134 | 44,5 |
| 764 | -66,405 | | | |
| | | 9,269 | | |
| 766 | -1689,208 | | | |
| 768 | | 4,940 | 1,6134 | 44,5 |
| 770 | 53,566 | | | |
| | | 4,950 | | |
| 772 | 61,547 | | | |
| 774 | | 11,700 | 1,4339 | 95,0 |
| 776 | -160,546 | | | |

(fortgesetzt)

| Brennweite = 48 mm, Blendenzahl = 2,5 | | | | |
|---|---|---|---|---|
| Bezugszeichen | Radius / mm | Dicken bzw. Luftabstände / mm | Brechzahl nd | Abbe'-Zahl νd |
|  |  | 0,120 |  |  |
| 778 | 102,632 |  |  |  |
| 780 |  | 7,700 | 1,4339 | 95,0 |
| 782 | -638,036 |  |  |  |
|  |  | 12,000 |  |  |
| 794 | 0,000 |  |  |  |
| 788 |  | 116,500 | 1,5168 | 64,2 |
| 796 | 0,000 |  |  |  |
| 792 |  | 3,000 | 1,5085 | 61,2 |
| 798 | 0,000 |  |  |  |
| (*) asphärisch | | | | |

Tab. 4

| Asphärenkoeffizienten: |  |
|---|---|
| K (Konuskonstante) | 0 |
| C | 0,0314179 |
| D | $0,500000*10^{-7}$ |
| E | $-0,150000*10^{-9}$ |
| F | 0 |
| G | 0 |
| H | 0 |

Tab. 5

| Brennweite = 60 mm, Blendenzahl = 2,5 | | | | |
|---|---|---|---|---|
| Bezugszeichen | Radius / mm | Dicken bzw. Luftabstände / mm | Brechzahl nd | Abbe'-Zahl νd |
| 1208 | 260,116 |  |  |  |
| 1210 |  | 6,000 | 1,6477 | 33,8 |
| 1212 | 83,104 |  |  |  |
|  |  | 13,180 |  |  |
| 1214 | 279,392 |  |  |  |
| 1216 |  | 6,000 | 1,4970 | 81,5 |
| 1218 | 59,207 |  |  |  |
|  |  | 26,800 |  |  |
| 1220 | -41,633 |  |  |  |
| 1222 |  | 10,000 | 1,5168 | 64,2 |
| 1224 | -45,620 |  |  |  |

(fortgesetzt)

| Brennweite = 60 mm, Blendenzahl = 2,5 |
|---|---|---|---|---|
| Bezugzeichen | Radius / mm | Dicken bzw. Luftabstände / mm | Brechzahl nd | Abbe'-Zahl vd |
|  |  | 0,100 |  |  |
| 1230 | 206,589 |  |  |  |
| 1232 |  | 9,300 | 1,5584 | 54,0 |
| 1234 | -120,219 |  |  |  |
|  |  | 3,500 |  |  |
| 1236 | 44,003 |  |  |  |
| 1238 |  | 9,450 | 1,5688 | 56,0 |
| 1240 | 47,538 |  |  |  |
|  |  | 33,320 |  |  |
| 1242 | 49,083 |  |  |  |
| 1244 |  | 5,710 | 1,4970 | 81,5 |
| 1246 | 30,177 (*) |  |  |  |
|  |  | 69,880 |  |  |
| 1256 | -450,881 |  |  |  |
| 1258 |  | 15,570 | 1,5924 | 68,3 |
| 1260 | -35,655 |  |  |  |
| 1262 |  | 21,600 | 1,6134 | 44,5 |
| 1264 | -62,146 |  |  |  |
|  |  | 11,390 |  |  |
| 1266 | -995,653 |  |  |  |
| 1268 |  | 4,940 | 1,6134 | 44,5 |
| 1270 | 56,656 |  |  |  |
|  |  | 5,000 |  |  |
| 1272 | 65,581 |  |  |  |
| 1274 |  | 11,700 | 1,4388 | 95,0 |
| 1276 | -165,829 |  |  |  |
|  |  | 0,120 |  |  |
| 1278 | 84,755 |  |  |  |
| 1280 |  | 7,700 | 1,4388 | 95,0 |
| 1282 | -750,449 |  |  |  |
|  |  | 12,000 |  |  |
| 1294 | 0,000 |  |  |  |
| 1288 |  | 116,500 | 1,5168 | 64,2 |
| 1296 | 0,000 |  |  |  |
| 1292 |  | 3,000 | 1,5085 | 61,2 |

(fortgesetzt)

| Brennweite = 60 mm, Blendenzahl = 2,5 | | | | |
|---|---|---|---|---|
| Bezugszeichen | Radius / mm | Dicken bzw. Luftabstände / mm | Brechzahl nd | Abbe'-Zahl vd |
| 1298 | 0,000 | | | |
| (*) asphärisch | | | | |

Tab. 6

| Asphärenkoeffizienten: | |
|---|---|
| K (Konuskonstante) | 0 |
| C | 0,033138 |
| D | $0,890000*10^{-7}$ |
| E | $-0,170000*10^{-9}$ |
| F | $-0,700000*10^{-13}$ |
| G | 0 |
| H | 0 |

Tab. 7

| Brennweite = 48 mm, Blendenzahl = 2,5, mit Brennweitenverlängerer | | | | |
|---|---|---|---|---|
| Bezugszeichen | Radius / mm | Dicken bzw. Luftabstände / mm | Brechzahl nd | Abbe'-Zahl vd |
| 1708 | 120,648 | | | |
| 1710 | | 7,550 | 1,7552 | 27,5 |
| 1712 | 91,484 | | | |
| | | 10,000 | | |
| 1714 | 313,438 | | | |
| 1716 | | 6,000 | 1,4339 | 95,0 |
| 1718 | 74,331 | | | |
| | | 25,000 | | |
| 1720 | -1,689,208 | | | |
| 1722 | | 6,000 | 1,4339 | 95,0 |
| 1724 | 72,538 | | | |
| | | 37,000 | | |
| 1730 | -346,584 | | | |
| 1732 | | 25,000 | 1,4875 | 70,4 |
| 1734 | -77,586 | | | |
| | | 16,377 | | |
| 1736 | 45,620 | | | |
| 1738 | | 5,300 | 1,4339 | 95,0 |
| 1740 | 45,620 | | | |
| | | 5,000 | | |

(fortgesetzt)

| Brennweite = 48 mm, Blendenzahl = 2,5, mit Brennweitenverlängerer | | | | |
|---|---|---|---|---|
| Bezugzeichen | Radius / mm | Dicken bzw. Luftabstände / mm | Brechzahl nd | Abbe'-Zahl νd |
| 1742 | 64,828 | | | |
| 1744 | | 7,450 | 1,5584 | 54,0 |
| 1746 | 155,028 | | | |
| | | 25,757 | | |
| 1748 | 82,972 | | | |
| 1750 | | 5,720 | 1,4339 | 95,0 |
| 1752 | 31,829* | | | |
| | | 10,000 | | |
| 1756 | -1090,064 | | | |
| 1758 | | 2,500 | 1,5168 | 64,2 |
| 1760 | 102,356 | | | |
| | | 0,100 | | |
| 1762 | 46,064 | | | |
| 1764 | | 8,900 | 1,6201 | 63,5 |
| 1766 | -117,272 | | | |
| | | 11,667 | | |
| 1768 | -71,852 | | | |
| 1770 | | 2,887 | 1,8467 | 23,8 |
| 1772 | 57,079 | | | |
| | | 1,995 | | |
| 1774 | 72,646 | | | |
| 1776 | | 9,251 | 1,8467 | 23,8 |
| 1778 | -61,080 | | | |
| 1780 | | 2,500 | 1,8350 | 43,0 |
| 1782 | -5401,582 | | | |
| | | 23,080 | | |
| 1784 | 460,206 | | | |
| 1786 | | 20,570 | 1,5691 | 71,3 |
| 1788 | -41,253 | | | |
| 1790 | | 17,340 | 1,6134 | 44,5 |
| 1792 | -66,405 | | | |
| | | 9,269 | | |
| 1794 | -1689,208 | | | |
| 1796 | | 4,940 | 1,6134 | 44,5 |
| 1798 | 53,566 | | | |
| | | 4,950 | | |
| 17100 | 61,547 | | | |

(fortgesetzt)

| Brennweite = 48 mm, Blendenzahl = 2,5, mit Brennweitenverlängerer | | | | |
|---|---|---|---|---|
| Bezugszeichen | Radius / mm | Dicken bzw. Luftabstände / mm | Brechzahl nd | Abbe'-Zahl νd |
| 17102 | | 11,700 | 1,4339 | 95,0 |
| 17103 | -160,546 | | | |
| | | 0,120 | | |
| 17104 | 102,632 | | | |
| 17106 | | 7,700 | 1,4339 | 95,0 |
| 17108 | -638,036 | | | |
| | | 12,000 | | |
| 17118 | 0,000 | | | |
| 17114 | | 116,50 | 1,5168 | 64,2 |
| 17120 | 0,000 | | | |
| 17116 | | 3,000 | 1,5085 | 61,2 |
| 17122 | 0,000 | | | |
| (*) asphärisch | | | | |

Tab. 8

| Asphärenkoeffizienten: | |
|---|---|
| K (Konuskonstante) | 0 |
| C | 0,0314179 |
| D | $0,500000*10^{-7}$ |
| E | $-0,150000*10^{-9}$ |
| F | 0 |
| G | 0 |
| H | 0 |

Tab. 9

| Brennweite = 60 mm, Blendenzahl = 2,5, mit Brennweitenverlängerer | | | | |
|---|---|---|---|---|
| Bezugszeichen | Radius / mm | Dicken bzw. Luftabstände / mm | Brechzahl nd | Abbe'-Zahl νd |
| 2208 | 260,116 | | | |
| 2210 | | 6,000 | 1,6477 | 33,8 |
| 2212 | 83,104 | | | |
| | | 13,180 | | |
| 2214 | 279,392 | | | |
| 2216 | | 6,000 | 1,4970 | 81,5 |
| 2218 | 59,207 | | | |
| | | 26,800 | | |
| 2220 | -41,633 | | | |

(fortgesetzt)

| Brennweite = 60 mm, Blendenzahl = 2,5, mit Brennweitenverlängerer | | | | |
|---|---|---|---|---|
| Bezugszeichen | Radius / mm | Dicken bzw. Luftabstände / mm | Brechzahl nd | Abbe'-Zahl vd |
| 2222 | | 10,000 | 1,5168 | 64,2 |
| 2224 | -45,620 | | | |
| | | 0,100 | | |
| 2230 | 206,589 | | | |
| 2232 | | 9,300 | 1,5584 | 54,0 |
| 2234 | -120,219 | | | |
| | | 3,500 | | |
| 2236 | 44,003 | | | |
| 2238 | | 9,450 | 1,5688 | 56,0 |
| 2240 | 47,538 | | | |
| | | 33,320 | | |
| 2242 | 49,083 | | | |
| 2244 | | 5,710 | 1,4970 | 81,5 |
| 2246 | 30,177* | | | |
| | | 7,120 | | |
| 2248 | -447,776* | | | |
| 2250 | | 1,900 | 1,6200 | 36,3 |
| 2252 | 62,709 | | | |
| | | 1,080 | | |
| 2254 | 50,447 | | | |
| 2256 | | 9,900 | 1,6030 | 65,5 |
| 2258 | -135,991 | | | |
| | | 10,610 | | |
| 2262 | 62,451 | | | |
| 2264 | | 4,970 | 1,8467 | 23,8 |
| 2266 | 108,556 | | | |
| 2268 | | 3,240 | 1,8830 | 40,8 |
| 2270 | 86,779 | | | |
| | | 5,630 | | |
| 2272 | -163,039 | | | |
| 2274 | | 2,410 | 1,8830 | 40,8 |
| 2276 | 180,333 | | | |
| | | 23,020 | | |
| 2278 | -450,881 | | | |
| 2280 | | 15,570 | 1,5924 | 68,3 |
| 2282 | -35,655 | | | |
| 2284 | | 21,600 | 1,6134 | 44,3 |

(fortgesetzt)

| Brennweite = 60 mm, Blendenzahl = 2,5, mit Brennweitenverlängerer | | | | |
|---|---|---|---|---|
| Bezugzeichen | Radius / mm | Dicken bzw. Luftabstände / mm | Brechzahl nd | Abbe'-Zahl vd |
| 2286 | -62,146 | | | |
| | | 11,390 | | |
| 2288 | -995,653 | | | |
| 2290 | | 4,940 | 1,6134 | 44,5 |
| 2292 | 56,656 | | | |
| | | 5,000 | | |
| 2294 | 65,581 | | | |
| 2296 | | 11,700 | 1,4388 | 95,0 |
| 2298 | -165,829 | | | |
| | | 0,120 | | |
| 22100 | 84,755 | | | |
| 22102 | | 7,700 | 1,4388 | 95,0 |
| 22104 | -750,449 | | | |
| | | 12,000 | | |
| 22114 | 0,000 | | | |
| 22108 | | 116,500 | 1,5168 | 62,2 |
| 22116 | 0,000 | | | |
| 22112 | | 3,000 | 1,5085 | 61,2 |
| 22118 | 0,000 | | | |
| (*) asphärisch | | | | |

Tab. 10

| Asphärenkoeffizienten Fläche 2248: | |
|---|---|
| K (Konuskonstante) | 0 |
| C | -0,0022333 |
| D | $0,610000*1^{-7}$ |
| E | $-0,200000*10^{-9}$ |
| F | 0 |
| G | 0 |
| H | 0 |

## Patentansprüche

1. Projektionsobjektiv für die Projektion digitaler Bilddaten, welches in der angegebenen Reihenfolge, von einer Projektionswand aus betrachtet, folgende Elemente aufweist:

    a) eine erste negative Linse (210; 710);
    b) eine zweite negative Linse (216; 716);
    c) eine dritte negative Linse (222; 722);

d) eine vierte positive optische Baugruppe (228; 728), die zwei Linsen (232, 238; 732, 738) aufweist;

e) eine fünfte positive Linse (244; 744);

f) eine sechste negative Linse (250; 750);

f1) eine Blende (254; 754);

g) eine siebente Linse (258; 758);

h) eine achte Linse (262; 762);

i) eine neunte negative Linse (268; 768);

j) eine zehnte positive Linse (274; 774); und

k) eine elfte positive Linse (280; 780);

wobei mindestens eine negative Linse vor der Blende (254; 754; 1254) aus Fluorkron oder hochbrechendem Schwerflint oder CaF2 ausgebildet ist; und

wobei mindestens eine positive Linse hinter der Blende (254; 754; 1254) aus Fluorkron oder hochbrechendem Schwerflint oder CaF2 ausgebildet ist.

2. Projektionsobjektiv für die Projektion digitaler Bilddaten, welches in der angegebenen Reihenfolge, von einer Projektionswand aus betrachtet, folgende Elemente aufweist:

a) eine erste negative Linse (1210);

b) eine zweite negative Linse (1216);

c) eine dritte negative Linse (1222);

d) eine vierte positive Linse (1232);

e) eine fünfte positive Linse (1238);

f) eine sechste negative Linse (1244);

g) eine Blende (1254);

h) eine siebente Linse (1258);

i) eine achte Linse (1262);

j) eine neunte negative Linse (1268);

k) eine zehnte positive Linse (1274); und

l) eine elfte positive Linse (1280);

wobei mindestens eine negative Linse vor der Blende (1254) aus Fluorkron oder hochbrechendem Schwerflint oder CaF2 ausgebildet ist; und

wobei mindestens eine positive Linse hinter der Blende (1254) aus Fluorkron oder hochbrechendem Schwerflint oder CaF2 ausgebildet ist.

1

1,9

**Fig. 1A**

1

2,37

**Fig. 1B**

Fig. 1C

Fig. 1D

Fig. 2

EP 2 083 302 A2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

**EP 2 083 302 A2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6188523 B1